(19) Europäisches Patentamt
European Patent Office
Office européen des brevets

(11) **EP 4 617 355 A1**

(12) **EUROPEAN PATENT APPLICATION**
published in accordance with Art. 153(4) EPC

(43) Date of publication:
**17.09.2025   Bulletin 2025/38**

(21) Application number: **22964719.3**

(22) Date of filing: **08.11.2022**

(51) International Patent Classification (IPC):
***C12M 1/36*** *(2006.01)*        ***G02B 21/33*** *(2006.01)*

(52) Cooperative Patent Classification (CPC):
**C12M 1/36; G02B 21/33**

(86) International application number:
**PCT/CN2022/130580**

(87) International publication number:
**WO 2024/098243 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MGI Tech Co., Ltd.**
**Shenzhen, Guangdong 518083 (CN)**

(72) Inventors:
• **ZHOU, Xiaoli**
  **Shenzhen, Guangdong 518083 (CN)**

• **CUI, Xingye**
  **Shenzhen, Guangdong 518083 (CN)**
• **AO, Xiang**
  **Shenzhen, Guangdong 518083 (CN)**
• **LU, Hao**
  **Shenzhen, Guangdong 518083 (CN)**
• **NIU, Zihua**
  **Shenzhen, Guangdong 518083 (CN)**

(74) Representative: **Haseltine Lake Kempner LLP**
**One Portwall Square**
**Portwall Lane**
**Bristol BS1 6BH (GB)**

(54) **LIQUID FEEDING AND DISCHARGING DEVICE AND METHOD, IMMERSION OBJECTIVE SYSTEM, GENE SEQUENCER, AND BIOCHEMICAL DETECTION METHOD**

(57)    A liquid supply and discharge device is provided, used to apply a working liquid from a liquid supply station to a working surface of a platform assembly. The liquid supply and discharge device is movable relative to the working surface and includes: a liquid supply conduit assembly configured to apply the working liquid to the working surface; a liquid discharge conduit assembly configured to aspirate the working liquid from the working surface; a conduit structure assembly connected between the liquid supply conduit assembly and the liquid discharge conduit assembly; a fluid interface assembly connected between the liquid supply station and the conduit structure assembly; and a driving assembly connected to the fluid interface assembly, where the driving assembly is configured to apply a forward driving force to the liquid supply conduit assembly through the fluid interface assembly so as to apply the working liquid to the working surface, or to apply a reverse driving force to the liquid discharge conduit assembly so as to aspirate the working liquid from the working surface.

FIG. 1

**Description**

TECHNICAL FIELD

The present disclosure relates to a liquid supply and discharge device, a liquid supply and discharge method, an immersion objective lens system, a gene sequencer, and a biochemical assay method.

BACKGROUND

Immersion objective lens is a commonly used technology in a field of lithography, where the air between an optical lens and a target plane is replaced by an immersion liquid. An addition of the immersion liquid (such as water, oil, etc.) may increase a refractive index (compared to air) and improve a resolution of the objective lens.

An equation for the resolution (R) is as follows:

$$R = \frac{0.61\lambda}{NA}$$

where $\lambda$ represents a wavelength of light for specimen imaging, and NA represents a numerical aperture of the objective lens.

An equation for the numerical aperture is as follows:

$$NA = n \times \sin \alpha$$

where n represents a refractive index of a medium through which the light passes, and $\alpha$ represents an aperture angle of a given objective lens.

According to the equation for the resolution and the equation for the numerical aperture, the resolution of the objective lens is inversely proportional to the numerical aperture (NA) and inversely proportional to the refractive index n of the medium. The refractive index of air is 1.0, the refractive index of water is 1.33, and the refractive index of glycerin is 1.47. Therefore, the addition of the immersion liquid between the optical lens and the target plane may increase the numerical aperture (NA) of the objective lens and improve the resolution (R) of the objective lens.

When an immersion objective lens is used for a long time, it is needed to replace an immersion liquid to ensure cleanliness of the immersion liquid and a normal use of the objective lens. In some possible applications, the immersion objective lens may need to be switched between two or more working surfaces, which further involves detachment and contact between the objective lens and the immersion liquid. Therefore, an automatic liquid supply and discharge is very important for the use of the objectives lens, and the replacement of the immersion liquid should not take too much time. Moreover, an automatic liquid supply and discharge method adapted to immersion objective lenses of different specifications and sizes may further improve compatibility and flexibility of apparatus.

In existing structure-conducting immersion liquid supply and discharge methods, an immersion liquid supply structure is fixed together with the objective lens and may move with the objective lens. Such immersion liquid supply structure is highly related to an objective lens structure and cannot match different objective lenses. An existing pipeline-conducting non-interference transmission system for an inverted microscope may accurately perform immersion liquid supply and removal, but the system takes a long time to perform liquid supply and aspiration operations, during which the objective lens cannot be used. Another type of pipeline-conducting system has an immersion liquid supply device fixed to an objective lens body, which is highly related to the objective lens structure and cannot match different objective lenses, and an objective lens barrel needs to be designed to achieve the liquid supply.

In summary, the existing liquid supply and discharge devices mainly have the following disadvantages.

(1) A liquid supply and discharge module that supports liquid supply and discharge functions is strongly related to the objective lens structure in terms of specification and size and cannot match different objective lenses, thus lacking compatibility and flexibility.

(2) During liquid supply and discharge processes, the objective lens needs to wait for a long time and cannot perform photography and other tasks. Especially when the liquid supply and discharge module is bound to the objective lens structure and the objective lens needs to be switched between two or more working surfaces or positions, there is a serial logical sequence of "liquid discharge---objective lens leaves a first working position-objective lens moves to a second working position---liquid supply", which consumes a lot of time.

SUMMARY

Embodiments of the present disclosure aim to solve at least one aspect of the above-mentioned problems.

According to a first aspect of the present disclosure, a liquid supply and discharge device is provided, which is used to apply a working liquid from a liquid supply station to a working surface of a platform assembly, where the liquid supply and discharge device is movable relative to the working surface, and the liquid supply and discharge device includes: a liquid supply conduit assembly configured to apply a working liquid to the working surface; a liquid discharge conduit assembly configured to aspirate the working liquid from the working surface; a conduit structure assembly connected between the liquid supply conduit assembly and the liquid discharge conduit assembly; a fluid interface assembly connected between the liquid supply station and the conduit structure assembly; and a driving assembly connected to the fluid interface assembly, where the driving assembly is configured to apply a forward driving force to the liquid supply conduit assembly through the fluid interface assembly so as to apply the working liquid to the working surface, or to apply a reverse driving force to the liquid discharge conduit assembly so as to aspirate the working liquid from the working surface.

According to the first aspect of the present disclosure, the liquid supply conduit assembly is suspended on a side of the working surface to face and to be spaced apart from the working surface, and the liquid discharge conduit assembly is spaced apart from the liquid supply conduit assembly and suspended on the same side of the working surface.

According to the first aspect of the present disclosure, the conduit structure assembly is formed integrally with the platform assembly, so that an opening of the liquid supply conduit assembly and an opening of the liquid discharge conduit assembly are located in a plane of the working surface.

According to the first aspect of the present disclosure, the driving assembly includes a driver connected between the liquid supply station and the fluid interface assembly.

According to the first aspect of the present disclosure, the fluid interface assembly includes a liquid supply pipeline in fluid communication with the liquid supply conduit assembly through the conduit structure assembly and a liquid discharge pipeline in fluid communication with the liquid discharge conduit assembly through the conduit structure assembly, and one end of the liquid supply pipeline away from the conduit structure assembly and one end of the liquid discharge pipeline away from the conduit structure assembly are connected to the driver.

According to the first aspect of the present disclosure, the conduit structure assembly is provided with a liquid supply interface connecting the liquid supply pipeline with the liquid supply conduit assembly and a liquid discharge interface connecting the liquid discharge pipeline with the liquid discharge conduit assembly.

According to the first aspect of the present disclosure, the driving assembly further includes a reversing assembly connected between the driver and the end of the liquid supply pipeline away from the conduit structure assembly and between the driver and the end of the liquid discharge pipeline away from the conduit structure assembly, the reversing assembly has a first position in which the liquid supply pipeline is in fluid communication with the driver and the liquid discharge pipeline is not in fluid communication with the driver, and a second position in which the liquid discharge pipeline is in fluid communication with the driver and the liquid supply pipeline is not in fluid communication with the driver.

According to the first aspect of the present disclosure, the fluid interface assembly further includes a filter in the liquid discharge pipeline, so that a fluid received by the liquid discharge pipeline from the liquid discharge conduit assembly is filtered by the filter and discharged to the liquid supply station through the reversing assembly.

According to the first aspect of the present disclosure, the reversing assembly includes at least one of a solenoid valve, a rotary valve, a pneumatic reversing valve, an electro-hydraulic reversing valve, a manual reversing valve, a piezoelectric valve, a pinch valve, a rotary valve, or a rotary cutting valve.

According to the first aspect of the present disclosure, the liquid supply and discharge device further includes a liquid discharge station connected to the liquid discharge conduit assembly through the driver and the conduit structure assembly.

According to the first aspect of the present disclosure, the driver includes a liquid supply driver and a liquid discharge driver, the liquid supply driver is connected between the liquid supply pipeline and the liquid supply station, and the liquid discharge driver is connected between the liquid discharge pipeline and the liquid discharge station.

According to the first aspect of the present disclosure, the driver includes at least one of a peristaltic pump, a plunger pump, a syringe pump, a gear pump, a diaphragm pump, a vacuum pump, a diaphragm pump, or an air compressor.

According to the first aspect of the present disclosure, the liquid supply driver is configured as a first pump, the liquid discharge driver is configured as a second pump, the first pump and the second pump are connected to form a dual pump, and the dual pump is configured so that the first pump drives the liquid supply conduit assembly to apply the working liquid to a first position of the working surface while the second pump drives the liquid discharge conduit assembly to aspirate a fluid located at a second position of the working surface; where the first position faces the liquid supply conduit assembly, the second position faces the liquid discharge conduit assembly, and the fluid includes a gas or a waste liquid converted from the working liquid located at the second position.

According to the first aspect of the present disclosure, the liquid supply driver is configured as a first pump, the liquid discharge driver is configured as a second pump, and the first pump and the second pump are operable independently of each other.

According to the first aspect of the present disclosure, the first pump and the second pump are respectively located on different sides of the working surface.

According to the first aspect of the present disclosure, the liquid supply conduit assembly includes at least two liquid supply conduits, the liquid supply pipeline includes liquid supply sub-pipelines respectively connected to the liquid supply conduits and a common liquid supply pipeline connected between the liquid supply sub-pipelines and the first pump, and a first multi-way connector is connected between the common liquid supply pipeline and the liquid supply sub-pipelines.

According to the first aspect of the present disclosure, the liquid discharge conduit assembly includes at least two liquid discharge conduits respectively corresponding to the liquid supply conduits, the liquid discharge pipeline includes liquid discharge sub-pipelines respectively connected to the liquid discharge conduits and a common liquid discharge pipeline connected between the liquid discharge sub-pipelines and the second pump, and a second multi-way connector is connected between the common liquid discharge pipeline and the liquid discharge sub-pipelines.

According to the first aspect of the present disclosure, at least one liquid supply sub-pipeline is provided with a first two-way valve.

According to the first aspect of the present disclosure, at least one liquid discharge sub-pipeline is provided with a second two-way valve.

According to the first aspect of the present disclosure, the liquid supply pipeline is provided with a sensor configured to detect a quality of the working liquid flowing into the liquid supply pipeline through the driver, and the fluid interface assembly further includes a bypass pipeline connected between the sensor and the liquid discharge station so that the working liquid detected by the sensor as unqualified flows into the liquid discharge station through the bypass pipeline.

According to the first aspect of the present disclosure, the fluid interface assembly further includes a third multi-way connector connecting the liquid discharge station, the liquid discharge driver and the bypass pipeline.

According to the first aspect of the present disclosure, the liquid supply and discharge device further includes a cleaning station configured to store at least a cleaning liquid for regularly cleaning the liquid supply pipeline.

According to a second aspect of the present disclosure, an immersion objective lens system is provided, including a platform assembly having a working surface and an objective lens movable relative to the platform assembly, where the immersion objective lens system further includes the liquid supply and discharge device of any one of claims 1 to 22, and the liquid supply and discharge device is configured to provide a working liquid as an immersion medium between the objective lens and the working surface.

According to the second aspect of the present disclosure, the working surface includes a cleaning region, and the immersion objective lens system further includes a cleaning assembly connected to the cleaning region; the cleaning assembly includes a cleaning conduit assembly extending to the cleaning region and a cleaning driving assembly connected to the cleaning conduit assembly; the cleaning driving assembly is configured to provide a cleaning liquid to the cleaning region through the cleaning conduit assembly to clean the objective lens when the objective lens moves above the cleaning region.

According to the second aspect of the present disclosure, the cleaning conduit assembly includes a first cleaning conduit and a second cleaning conduit, the first cleaning conduit is configured to deliver the cleaning liquid to the cleaning region, and the second cleaning conduit is configured to aspirate the cleaning liquid from the cleaning region.

According to the second aspect of the present disclosure, the cleaning conduit assembly further includes a blowing conduit configured to dry the objective lens cleaned by the cleaning liquid.

According to a third aspect of the present disclosure, a gene sequencer is provided, including a gene sequencing chip and an optical system configured to detect the gene sequencing chip, where the optical system includes an objective lens movable relative to the gene sequencing chip and a liquid supply and discharge device configured to provide an immersion medium between the objective lens and the gene sequencing chip, and a side of the gene sequencing chip close to the objective lens includes a working surface; the liquid supply and discharge device is configured to apply an immersion medium from a liquid supply station to the working surface and the liquid supply and discharge device is movable relative to the working surface, and the liquid supply and discharge device includes: a liquid supply conduit assembly suspended on a side of the working surface to face and to be spaced apart from the working surface; a liquid discharge conduit assembly spaced apart from the liquid supply conduit assembly and suspended on the same side of the working surface; a conduit structure assembly connected between the liquid supply conduit assembly and the liquid discharge conduit assembly; a fluid interface assembly connected between the liquid supply station and the conduit structure assembly; and a driving assembly connected to the fluid interface assembly, where the driving assembly is configured to apply a forward driving force to the liquid supply conduit assembly through the fluid interface assembly so as to apply the immersion medium to the working surface, or to apply a reverse driving force to the liquid discharge conduit assembly so as to aspirate the immersion medium from the working surface.

According to a fourth aspect of the present disclosure, a gene sequencer for multiple chips is provided, where the gene sequencer includes at least two chip detection positions configured to respectively install gene sequencing chips, the gene sequencer further includes an optical system configured to detect the gene sequencing chips, the optical system includes an objective lens movable relative to the gene sequencing chips and a liquid supply and discharge device configured to provide an immersion medium between the objective lens and the gene sequencing chip, and a side of each of the at least two gene sequencing chips close to the objective lens includes a working surface; and where the liquid supply and discharge device is configured to apply an immersion medium from a liquid supply station to the working surface and the liquid supply and discharge device is movable relative to the working surface, and the liquid supply and discharge device includes: at least two liquid supply conduits suspended on a side of the working surfaces to face and to be spaced apart from the working surfaces; at least two liquid discharge conduits spaced apart from the at least two liquid supply conduits, where the at least two liquid discharge conduits respectively correspond to the at least two liquid supply conduits and are suspended on the same side of the working surfaces; a conduit structure assembly connected between the at least two liquid supply conduits and the at least two liquid discharge conduits; a fluid interface assembly connected between the liquid supply station and the conduit structure assembly; and a driving assembly connected to the fluid interface assembly, where the driving assembly is configured to apply a forward driving force to the at least two liquid supply conduits through the fluid interface assembly so as to apply the immersion medium to the working surfaces respectively through the at least two liquid supply conduits, or to apply a reverse driving force to the at least two liquid discharge conduits so as to aspirate the immersion medium from the working surfaces.

According to a fifth aspect of the present disclosure, a liquid supply and discharge method for an objective lens is provided, including: a liquid supply step of suspending a liquid supply conduit assembly above an $i^{th}$ liquid supply region of a working surface having n liquid supply regions, i=1, 2, 3...n-1, n, and applying, by using a driving assembly, a working liquid from a liquid supply station to the $i^{th}$ liquid supply region through a fluid interface assembly, a conduit structure assembly and a liquid supply conduit assembly in sequence; a detection step of driving the objective lens to move relative to the working surface so that the objective lens is in contact with the working liquid in the $i^{th}$ liquid supply region and enters a working state, and driving the objective lens to leave the $i^{th}$ liquid supply region after the working state ends; and a liquid discharge step of suspending a liquid discharge conduit assembly above the $i^{th}$ liquid supply region, and aspirating, by using the driving assembly, a waste liquid converted from the working liquid from the $i^{th}$ liquid supply region through the liquid discharge conduit assembly, the conduit structure assembly and the fluid interface assembly in sequence.

According to the fifth aspect of the present disclosure, the liquid supply step, the detection step and the liquid discharge step are executed cyclically until a detection of the objective lens in an $n^{th}$ liquid supply region is completed and a fluid in the $n^{th}$ liquid supply region is aspirated.

According to the fifth aspect of the present disclosure, the driving assembly includes a liquid supply driver and a liquid discharge driver, and in a case of i≥2, the liquid discharge step that the liquid discharge driver drives the liquid discharge conduit assembly to execute for an $(i-1)^{th}$ liquid supply region is executed simultaneously with the liquid supply step that the liquid supply driver drives the liquid supply conduit assembly to execute for the $i^{th}$ liquid supply region.

According to the fifth aspect of the present disclosure, the liquid discharge step further includes: filtering, by using a filter in the fluid interface assembly, the waste liquid aspirated into the fluid interface assembly from the $i^{th}$ liquid supply region so as to convert the waste liquid into a working liquid, and returning the working liquid to the liquid supply station by using the driving assembly.

According to the fifth aspect of the present disclosure, the driving assembly includes a common driver configured to firstly drive the liquid discharge conduit assembly to execute the liquid discharge step for an $(i-1)^{th}$ liquid supply region, and then drive the liquid supply conduit assembly to execute the liquid supply step for the $i^{th}$ liquid supply region.

According to the fifth aspect of the present disclosure, the liquid supply driver is configured as a first pump, the liquid discharge driver is configured as a second pump, the first pump and the second pump are connected to each other to form a dual pump, and the dual pump is configured so that the first pump drives the liquid supply conduit assembly to execute the liquid supply step in a liquid supply region while the second pump drives the liquid discharge conduit assembly to execute the liquid discharge step in another liquid supply region.

According to the fifth aspect of the present disclosure, the second pump is connected between the liquid discharge conduit assembly and the liquid discharge station, and the liquid discharge step further includes driving, by using the second pump, the waste liquid from the liquid supply region to enter the fluid interface assembly so as to flow into the liquid discharge station.

According to the fifth aspect of the present disclosure, the liquid supply step further includes a bubble detection step of detecting, by using a bubble sensor provided in the fluid interface assembly, whether a bubble is contained in the working liquid to be flowed into the liquid supply conduit assembly through the bubble sensor, so that in a case of the bubble being detected, the working liquid flows into the liquid discharge station through a bypass pipeline connected between the bubble sensor and the liquid discharge station, and in a case of no bubble being detected, the working liquid flows into the liquid supply conduit assembly through the bubble sensor.

According to the fifth aspect of the present disclosure, the liquid supply and discharge method further includes an objective lens cleaning step of cleaning the objective lens using a cleaning assembly connected to a cleaning region of the working surface, where the cleaning assembly includes a cleaning conduit assembly extending to the cleaning region and a cleaning driving assembly connected to the cleaning conduit assembly, and the cleaning driving assembly is configured to provide a cleaning liquid to the cleaning region through the cleaning conduit assembly to clean the objective lens when the objective lens moves above the cleaning region.

According to a sixth aspect of the present disclosure, a liquid supply and discharge method for an objective lens is provided, where the objective lens is configured to detect a platform assembly including a plurality of platforms, each of the plurality of platforms includes a working surface, and the liquid supply and discharge method includes: a liquid supply step of suspending at least two liquid supply conduit assemblies respectively above liquid supply regions of at least two working surfaces, and applying, by using a driving assembly, a working liquid from a liquid supply station to the liquid supply regions on the at least two working surfaces through a fluid interface assembly, a conduit structure assembly and the at least two liquid supply conduit assemblies in sequence; a detection step of driving the objective lens to move relative to the at least two working surfaces so that the objective lens successively contacts the working liquid in the liquid supply regions on the at least two working surfaces and enters a working state, and driving the objective lens to leave the liquid supply regions after the working state ends; and a liquid discharge step of suspending a liquid discharge conduit assembly above the liquid supply regions after the objective lens leaves the liquid supply regions, and aspirating, by using the driving assembly, a fluid located in the liquid supply regions from the liquid supply regions through the liquid discharge conduit assembly, the conduit structure assembly and the fluid interface assembly in sequence.

According to the sixth aspect of the present disclosure, the at least two liquid supply conduit assemblies are supported by the same conduit structure assembly, and the liquid supply step includes driving, by using the driving assembly, the working liquid to flow through the conduit structure assembly and to be applied to different working surfaces among the at least two working surfaces simultaneously through the at least two liquid supply conduit assemblies.

According to the sixth aspect of the present disclosure, the liquid supply step further includes: successively driving, by using the driving assembly, the working liquid to be applied through each of the at least two liquid supply conduit assemblies to a corresponding working surface of the at least two working surfaces.

According to the sixth aspect of the present disclosure, the liquid discharge step further includes: filtering, by using a filter, a waste liquid converted from the working liquid and entering the fluid interface assembly from the liquid supply region into the working liquid, and returning, by using the driving assembly, the working liquid formed by the filtering to the liquid supply station.

According to the sixth aspect of the present disclosure, the liquid discharge step further includes: driving, by using the driving assembly, the waste liquid converted from the working liquid from the liquid supply region to enter the fluid interface assembly so as to flow into a liquid discharge station.

According to the sixth aspect of the present disclosure, the liquid supply step further includes a bubble detection step of detecting, by using a bubble sensor provided in the fluid interface assembly, whether a bubble is contained in the working liquid to be flowed into the liquid supply conduit assembly through the bubble sensor, so that in a case of the bubble being detected, the working liquid flows into the liquid discharge station through a bypass pipeline connected between the bubble sensor and the liquid discharge station, and in a case of no bubble being detected, the working liquid flows into the liquid supply conduit assembly through the bubble sensor.

According to the sixth aspect of the present disclosure, the liquid supply and discharge method further includes an objective lens cleaning step of cleaning the objective lens using a cleaning assembly connected to a cleaning region of the working surface, where the cleaning assembly includes a cleaning conduit assembly extending to the cleaning region and a cleaning driving assembly connected to the cleaning conduit assembly, and the cleaning driving assembly is configured to provide a cleaning liquid to the cleaning region through the cleaning conduit assembly to clean the objective lens when the objective lens moves above the cleaning region.

According to a seventh aspect of the present disclosure, a liquid supply and discharge method for an objective lens is provided, including: step a of placing a liquid supply conduit assembly in a conduit structure assembly formed integrally with a platform assembly, so that an opening of the liquid supply conduit assembly is located in an $i^{th}$ liquid supply region of a working surface having n liquid supply regions in a plane of the working surface of the platform assembly, i=1, 2, 3...n-1, n, and applying, by using a driving assembly, a working liquid from a liquid supply station to the $i^{th}$ liquid supply region through a fluid interface assembly, the liquid supply conduit assembly and the conduit structure assembly in sequence; step b of placing a liquid discharge conduit assembly in the conduit structure assembly formed integrally with the platform assembly, so that an opening of the liquid discharge conduit assembly is located in a $j^{th}$ liquid discharge region of the working surface having m liquid discharge regions in the plane of the working surface of the platform assembly, j=1, 2, 3...m-1, m; step c of driving the objective lens to move relative to the working surface so that the objective lens contacts the working liquid located in the $i^{th}$ liquid supply region and enters a working state; step d of driving the objective lens and a waste liquid converted from the working liquid and attached to the objective lens to leave the $i^{th}$ liquid supply region after the working state ends, moving the objective lens and the waste liquid to directly above the opening of the liquid discharge conduit assembly, and aspirating the waste liquid from the objective lens and the $j^{th}$ liquid discharge region by using the liquid discharge conduit assembly while applying the working liquid to the $i^{th}$ liquid supply region of the working surface by using the liquid supply conduit assembly; step e of driving the objective lens to move relative to the working surface so that the objective lens contacts the working liquid located in the $i^{th}$ liquid supply region and enters the working state; step f of cyclically executing the step d to the step e for multiple times; and step g of driving the objective lens and the waste liquid converted from the working liquid and attached to the objective lens to leave the $i^{th}$ liquid supply region after the working state ends, moving the objective lens and the waste liquid to directly above the opening of the liquid discharge conduit assembly, and aspirating the waste liquid from the objective lens and the $j^{th}$ liquid discharge region by using the liquid discharge conduit assembly.

According to an eighth aspect of the present disclosure, a biochemical assay method is provided, including: loading a sample to be detected into a lane of a chip flow cell; and loading a reagent containing a plurality of different reaction components into the lane of the chip flow cell to perform a biochemical reaction between the sample to be detected and the reagent, where the reaction components include at least one of a sample generation component or a sample analysis component; the biochemical reaction includes generating a sample in the lane of the chip flow cell, by allowing different sample generation components to flow into the lane and controlling a reaction condition in the lane, and the biochemical reaction further includes analyzing the sample generated in the lane, by allowing the sample analysis component to flow into the lane and react with the generated sample to provide a related detectable signal; applying, by using a liquid supply conduit assembly, an immersion medium to a detection position on the working surface corresponding to the related detectable signal; moving an optical system relative to the chip flow cell to the detection position so as to contact the immersion medium and collect the related detectable signal; and separating the optical system from the immersion medium while aspirating the immersion medium from the detection position by using a liquid discharge conduit assembly, where the liquid supply conduit assembly is spaced apart from the liquid discharge conduit assembly, and the liquid supply conduit assembly and the liquid discharge conduit assembly are connected to each other through a conduit structure assembly.

According to the eighth aspect of the present disclosure, the biochemical reaction is a nucleic acid sequencing reaction, and the sample to be detected is a nucleic acid sequencing library.

According to the eighth aspect of the present disclosure, the detectable signal is an optical signal.

According to the eighth aspect of the present disclosure, the sample to be detected is a tissue sample, and the biochemical reaction is a specific binding reaction.

BRIEF DESCRIPTION OF THE DRAWINGS

The accompanying drawings, which are incorporated herein and form a part of the specification, illustrate the present disclosure and may be used together with the description to further explain the principles of the present disclosure and enable those skilled in the related art to make and use the embodiments described herein.

FIG. 1 shows a general block diagram of a liquid supply and discharge device according to the embodiments of the present disclosure;

FIG. 2 shows a schematic diagram of a liquid supply and discharge device according to a first embodiment of the present disclosure;

FIG. 3 shows a schematic diagram of discharging a waste liquid in parallel using the liquid supply and discharge device shown in FIG. 2;

FIG. 4 shows a schematic diagram of feeding a working liquid in parallel using the liquid supply and discharge device shown in FIG. 2;

FIG. 5 shows a schematic diagram of a liquid supply and discharge device according to a second embodiment of the present disclosure;

FIG. 6 shows a schematic diagram of a liquid supply and discharge device according to a third embodiment of the present disclosure;

FIG. 7 shows a schematic diagram of a liquid supply and discharge device according to a fourth embodiment of the present disclosure;

FIG. 8 shows a schematic diagram of discharging a waste liquid in parallel using the liquid supply and discharge device shown in FIG. 7;

FIG. 9 shows a schematic diagram of a liquid supply and discharge device according to a fifth embodiment of the present disclosure;

FIG. 10 shows a schematic diagram of a liquid supply and discharge device according to a sixth embodiment of the present disclosure;

FIG. 11 shows a schematic diagram of a portion of a liquid supply and discharge device according to a seventh embodiment of the present disclosure; and

FIG. 12 shows a schematic diagram of cleaning an objective lens of the liquid supply and discharge devices according to the first embodiment to the seventh embodiment of the present disclosure.

Features of the present disclosure will become more apparent from the following detailed description provided in conjunction with the accompanying drawings, where similar reference numerals denote corresponding elements throughout. In the accompanying drawings, similar reference numerals generally indicate identical, functionally similar, and/or structurally similar elements. Unless otherwise stated, the accompanying drawings provided throughout the present disclosure should not be construed as being drawn to scale.

DETAILED DESCRIPTION OF EMBODIMENTS

Technical solutions of the present disclosure will be further specifically described below through embodiments in conjunction with the accompanying drawings. In the specification, the same or similar reference numerals indicate the same or similar components. The following description of the embodiments of the present disclosure with reference to the accompanying drawings is intended to explain a general inventive concept of the present disclosure and should not be construed as a limitation to the present disclosure.

Furthermore, in the following detailed description, for the sake of explanation, many specific details are set forth to provide comprehensive understanding of the embodiments of the present disclosure. Obviously, however, one or more embodiments may also be implemented without these specific details. In other cases, well-known structures and devices are illustrated to simplify the accompanying drawings.

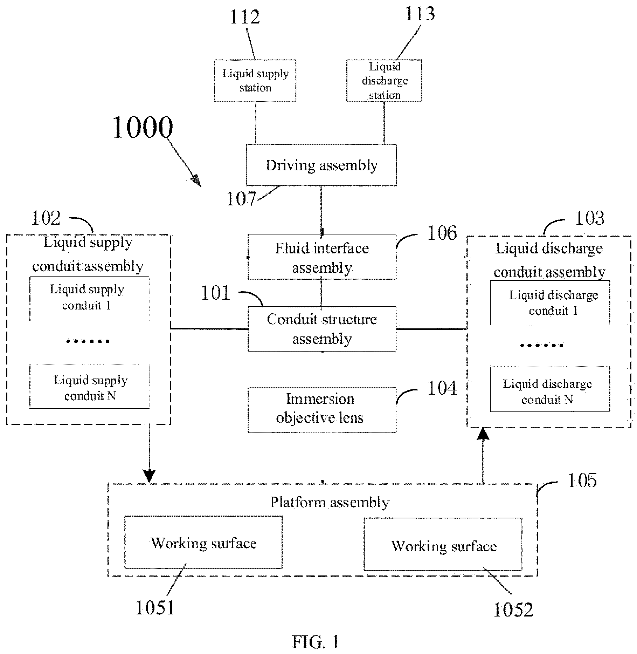

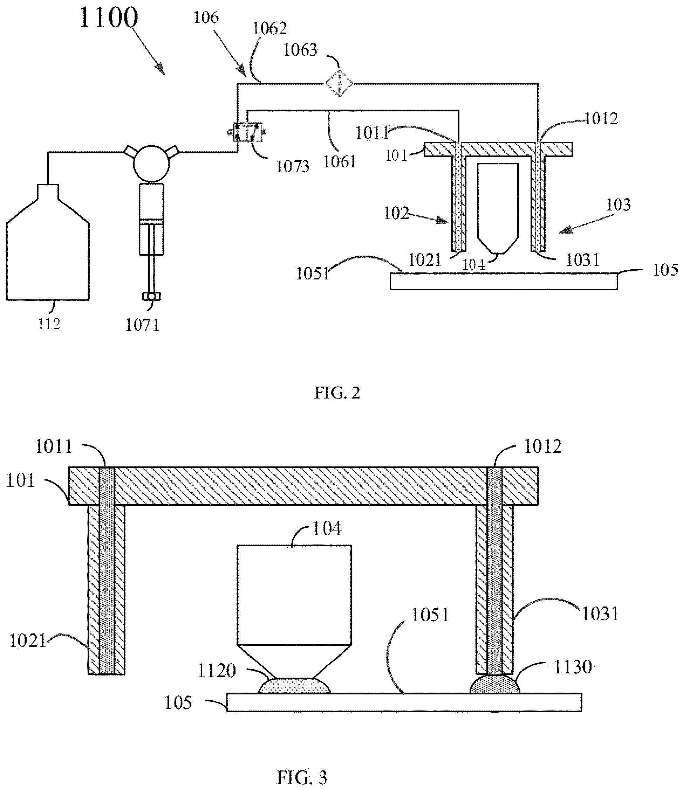

FIG. 1 shows a general block diagram of a liquid supply and discharge device according to the embodiments of the present disclosure. FIG. 2 to FIG. 12 show liquid supply and discharge devices according to several specific embodiments of the present disclosure.

Referring to FIG. 1, a liquid supply and discharge device 1000 is provided to apply a working liquid from a liquid supply station 112 to working surfaces 1051 and 1052 of a platform assembly 105. The liquid supply and discharge device 1000 is movable relative to the working surfaces 1051 and 1052. For the sake of clarity, FIG. 1 only shows two working surfaces 1051 and 1052, but the present disclosure is not limited thereto, and the liquid supply and discharge device 1000 may include more working surfaces.

The liquid supply and discharge device 1000 includes: a conduit structure assembly 101, a liquid supply conduit assembly 102, a liquid discharge conduit assembly 103, a fluid interface assembly 106, a driving assembly 107, a liquid supply station 112, and a liquid discharge station 113.

The liquid supply conduit assembly 102 is suspended on a side of the working surfaces 1051 and 1052 to face and to be spaced apart from the working surfaces 1051 and 1052. The liquid supply conduit assembly 102 includes n liquid supply conduits. The liquid discharge conduit assembly 103 is spaced apart from the liquid supply conduit assembly 102 and suspended on the same side of the working surfaces 1051 and 1052. The liquid discharge conduit assembly 103 includes n liquid discharge conduits. The liquid supply conduit or the liquid discharge conduit may be a metal tube, a plastic tube, etc. The conduit structure assembly 101 (which may be constructed as a plate or a block) is connected between the liquid supply conduit assembly 102 and the liquid discharge conduit assembly 103 to define a relative position between the liquid supply conduit assembly 102 and the platform assembly 105 and a relative position between the liquid discharge conduit assembly 103 and the platform assembly 105. The conduit structure assembly 101 is provided with a liquid supply interface 1011 connecting a liquid supply pipeline 1061 and the liquid supply conduit assembly 102, and a liquid discharge interface 1012 connecting a liquid discharge pipeline 1062 and the liquid discharge conduit assembly 103. The fluid interface assembly 106 is connected between the liquid supply station 112 and the conduit structure assembly 101. A driving assembly 107 is connected to the fluid interface assembly 106, and the driving assembly 107 is configured to apply a forward driving force to the liquid supply conduit assembly 102 through the fluid interface assembly 106 so as to apply the working liquid to the working surfaces 1051 and 1052, or to apply a reverse driving force to the liquid discharge conduit assembly 103 so as to aspirate the working liquid from the working surfaces 1051 and 1052. A liquid supply includes a continuous liquid addition and an intermittent droplet addition. A liquid discharge station 113 is connected to the liquid discharge conduit assembly 103 through the driving assembly 107, the fluid interface assembly 106 and the conduit structure assembly 101. The liquid supply station 112 is connected to the liquid supply conduit assembly 102 through the driving assembly 107, the fluid interface assembly 106 and the conduit structure assembly 101.

As shown in FIG. 1, the liquid supply and discharge device 1000 is relatively independent of an immersion objective lens 104 in structure, so that the liquid supply and discharge device 1000 may adapt to immersion objective lenses 104 of different specifications and sizes, and there is no need to design different liquid supply and discharge devices according to immersion objective lenses 104 of different specifications and sizes. The liquid discharge conduit assembly 103 and the liquid supply conduit assembly 102 are spaced apart from each other and suspended on the same side of the working surfaces 1051 and 1052, so that the liquid discharge conduit assembly 103 and the liquid supply conduit assembly 102 may work simultaneously to aspirate the working liquid from the working surfaces 1051 and 1052 while applying another working liquid to the working surfaces 1051 and 1052. In this way, a liquid supply operation and a liquid discharge operation may be performed in parallel, without waiting for a completion of one operation before starting the other operation, thereby saving time.

A liquid supply and discharge operation performed using the liquid supply and discharge device 1000 includes the following steps.

In step a1, a working liquid in the liquid supply station 112 is added to the platform assembly 105 by using the liquid supply conduit assembly 102.

In step a2, the platform assembly 105 and the immersion objective lens 104 move relative to each other, so that the working liquid is in full contact with the immersion objective lens 104 and the immersion objective lens 104 enters a working state.

In step a3, after the immersion objective lens 104 finishes working, the platform assembly 105 and the immersion objective lens 104 move relative to each other, so that the immersion objective lens 104 is separated from a waste liquid converted from the working liquid (that is, the objective lens 104 is immersed in the working liquid in the working state, causing the working liquid to be contaminated by impurities in the environment and become the waste liquid) while the liquid supply conduit assembly 102 adds the working liquid in the liquid supply station 112 to the platform assembly 105.

In step a4, the platform assembly 105 and the immersion objective lens 104 move relative to each other so that the liquid discharge conduit assembly 103 contacts the working liquid on the platform assembly 105, and the liquid discharge conduit assembly 103 removes the waste liquid while the working liquid is in full contact with the immersion objective lens 104 and the immersion objective lens 104 enters the working state.

In step a5, the step a3 and the step a4 are executed cyclically for multiple times.

In step a6, after the use of the immersion objective lens 104 is finished, the platform assembly 105 and the immersion objective lens 104 move relative to each other, and the immersion objective lens 104 is separated from the waste liquid converted from the working liquid.

In step a7, the platform assembly 105 and the immersion objective lens 104 move relative to each other, and the liquid discharge conduit assembly 103 contacts the waste liquid on the platform assembly 105 to remove the waste liquid.

Liquid supply and discharge devices 1100 to 1700 are all different modifications or specific implementations of the liquid supply and discharge device 1000 in FIG. 1.

The liquid supply and discharge device 1100 according to a first embodiment of the present disclosure will be described with reference to FIG. 2 to FIG. 4.

The liquid supply and discharge device 1100 includes a liquid supply station 112, a driving assembly 107, a fluid interface assembly 106, a conduit structure assembly 101, a liquid supply conduit assembly 102 including a single liquid supply conduit 1021, and a liquid discharge conduit assembly 103 including a single liquid discharge conduit 1031. The immersion objective lens 104 is located between the liquid supply conduit 1021 and the liquid discharge conduit 1031. The liquid supply conduit 1021 and the liquid discharge conduit 1031 are located on the same side of the platform assembly 105 having the working surface 1051.

The driving assembly 107 includes a driver 1071 connected between the liquid supply station 112 and the fluid interface assembly 106. The driver 1071 is constructed in the form of a pump including two valve ports, one valve port is connected to the liquid supply station 112, and the other valve port is connected to the fluid interface assembly 106. The pump includes but is not limited to at least one of a peristaltic pump, a plunger pump, a syringe pump, a gear pump, a diaphragm pump, a vacuum pump, a diaphragm pump, or an air compressor. The fluid interface assembly 106 includes a liquid supply pipeline 1061 which is in fluid communication with the liquid supply conduit assembly 102 through the conduit structure assembly 101, and a liquid discharge pipeline 1062 which is in fluid communication with the liquid discharge conduit assembly 103 through the conduit structure assembly 101. One end of the liquid supply pipeline 1061 away from the conduit structure assembly 101 and one end of the liquid discharge pipeline 1062 away from the conduit structure assembly 101 are connected to the driver 1071. The driving assembly 107 further includes a reversing assembly 1073 connected between the driver 1071 and the end of the liquid supply pipeline 1061 away from the conduit structure assembly 101 and between the driver 1071 and the end of the liquid discharge pipeline 1062 away from the conduit structure assembly 101. The reversing assembly 1073 has a first position in which the liquid supply pipeline 1061 is in fluid communication with the driver 1071 and the liquid discharge pipeline 1062 is not in fluid communication with the driver 1071, and a second position in which the liquid discharge pipeline 1062 is in fluid communication with the driver 1071 and the liquid supply pipeline 1061 is not in fluid communication with the driver 1071. The reversing assembly 1073 includes but is not limited to at least one of a solenoid valve, a rotary valve, a pneumatic reversing valve, an electro-hydraulic reversing valve, a manual reversing valve, a piezoelectric valve, a pinch valve, a rotary valve, or a rotary cutting valve.

The fluid interface assembly 106 further includes a filter 1063 in the liquid discharge pipeline 1062. A fluid (i.e., the above-mentioned waste liquid) received by the liquid discharge pipeline 1062 from the liquid discharge conduit assembly 103 becomes a working liquid after impurities are filtered out by the filter 1063. The working liquid formed by filtering is discharged to the liquid supply station 112 through the reversing assembly 1073.

A liquid supply and discharge operation performed using the liquid supply and discharge device 1100 includes the following steps.

In step b1, the driver 1071 aspirates the working liquid 1120 from the liquid supply station 112, and adds the working liquid 1120 onto the platform assembly 105 through the liquid supply pipeline 1061 (it is possible to operate the driver 1071 to aspirate back a particular volume of working liquid 1120 after the liquid supply is completed, so as to prevent the liquid from hanging on the liquid supply conduit 1021 and the conduit structure assembly 101).

In step b2, the platform assembly 105 and the objective lens 104 move relative to each other, so that the objective lens 104 is in full contact with the working liquid 1120 and enters a working state.

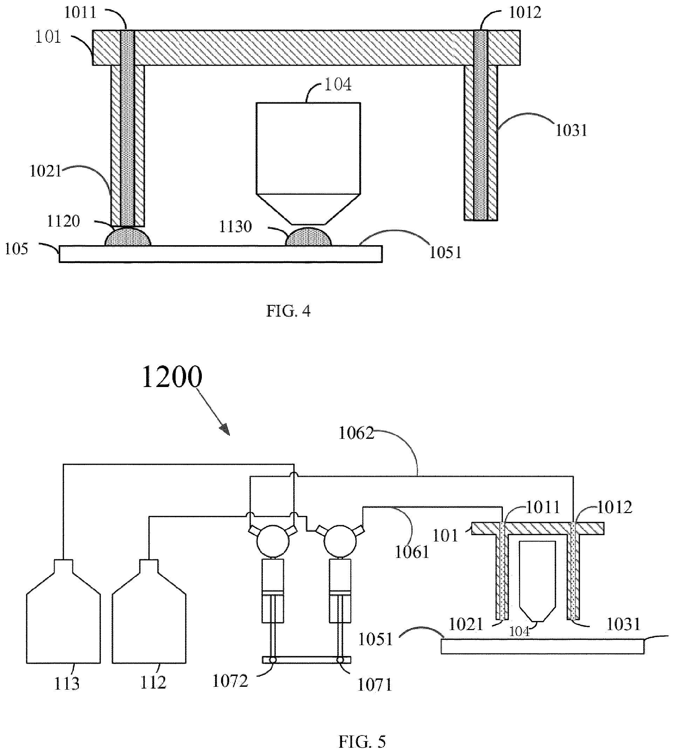

In step b3, after the objective lens 104 finishes working, the platform assembly 105 and the objective lens 104 move relative to each other, and the objective lens 104 is separated from the waste liquid 1130 converted from the working liquid 1120 while the driver 1071 performs a liquid supply through the liquid supply pipeline 1061 and the liquid supply conduit 1021 (shown in FIG. 4).

In step b4, the platform assembly 105 and the objective lens 104 move relative to each other, so that the objective lens 104 is in full contact with the working liquid 1120 added in the step b3 while the liquid discharge conduit 1031 is in contact with the waste liquid 1130 (shown in FIG. 3); the driver 1071 aspirates the waste liquid 1130 on the platform assembly 105, the waste liquid 1130 is filtered by the filter 115 to become the working liquid 1120, and the working liquid 1120 formed by filtering is discharged to the liquid supply station 112 through the driver 1071.

In step b5, the platform assembly 105 and the objective lens 104 move relative to each other, and the objective lens 104 enters the working state.

In step b6, the step b3 to the step b5 are executed cyclically for multiple times.

In step b7, after the use of the objective lens 104 is finished, the platform assembly 105 and the objective lens 104 move relative to each other, and the objective lens 104 is separated from the waste liquid 1130.

In step b8, the platform assembly 105 and the objective lens 104 move relative to each other so that the liquid discharge conduit 1031 is in contact with the waste liquid 1130, the driver 1071 aspirates the waste liquid 1130 on the platform assembly 105, the waste liquid 1130 is filtered by the filter 115, and the working liquid 1120 formed by filtering is discharged to the liquid supply station 112 through the driver 1071.

As mentioned above, the liquid supply and discharge device 1100 may not only perform the liquid supply operation and the liquid discharge operation simultaneously to save working time, but also recycle the working liquid to reduce material costs.

The liquid supply and discharge device 1200 according to a second embodiment of the present disclosure will be described with reference to FIG. 5.

Different from the driver 1071 in the liquid supply and discharge device 1100 that is used for both liquid supply and liquid discharge, the driver 1071 in the liquid supply and discharge device 1200 is only used for liquid supply. The liquid supply and discharge device 1200 includes a liquid supply driver 1071 and a liquid discharge driver 1072. The liquid supply driver 1071 is connected between the liquid supply pipeline 1061 and the liquid supply station 112, and the liquid discharge driver 1072 is connected between the liquid discharge pipeline 1062 and the liquid discharge station 113. The liquid supply driver 1071 is configured as a first pump, and the liquid discharge driver 1072 is configured as a second pump. The first pump and the second pump are connected to form a dual pump, so that the first pump and the second pump may operate simultaneously. The dual pump is configured so that the first pump drives the liquid supply conduit assembly 102 (i.e., the liquid supply conduit 1021) to apply the working liquid to a first position of the working surface 1051 while the second pump drives the liquid discharge conduit assembly 103 (i.e., the liquid discharge conduit 1031) to aspirate the fluid located at a second position of the working surface. The first position faces the liquid supply conduit assembly 102 (i.e., the liquid supply conduit 1021), and the second position faces the liquid discharge conduit assembly 103 (i.e., the liquid discharge conduit 1031). The fluid includes gas or a waste liquid converted from the working liquid located at the second position. A relative position between the liquid supply conduit 1021 and the liquid discharge conduit 1031 is defined by the conduit structure assembly 101. In this embodiment, through the dual pump, it is possible to synchronize an aspiration of waste liquid on the platform assembly 105 and an aspiration of working liquid in the liquid supply station 112, and synchronize the liquid supply to the platform assembly 105 and the discharge of waste liquid to the liquid discharge station 113, which further simplifies the operating steps of the liquid supply and discharge device 1200.

A liquid supply and discharge operation performed using the liquid supply and discharge device 1200 includes the following steps.

In step c1, the first pump aspirates the working liquid from the liquid supply station 112 while the second pump aspirates the air on the platform assembly 105, and the first pump adds the working liquid to the platform assembly 105 through the liquid supply conduit 1021 while the second pump discharges the air to the liquid discharge station 113 through the liquid discharge conduit 1031.

In step c2, the platform assembly 105 and the objective lens 104 move relative to each other, so that the objective lens 104 is in full contact with the working liquid and enters a working state.

In step c3, after the objective lens 104 finishes working, the platform assembly 105 and the objective lens 104 move relative to each other; the objective lens 104 is separated from the waste liquid converted from the working liquid, while the first pump adds the working liquid to the platform assembly 105 through the liquid supply conduit 1021 and the second pump discharges the air to the liquid discharge station 113.

In step c4, the platform assembly 105 and the objective lens 104 move relative to each other, so that the objective lens 104 is in full contact with the working liquid while the liquid discharge conduit 1031 is in contact with the waste liquid, then the second pump aspirates the waste liquid while the first pump aspirates the working liquid from the liquid supply station 112.

In step c5, the platform assembly 105 and the objective lens 104 move relative to each other, and the objective lens enters the working state.

In step c6, when the objective lens 104 finishes working, the platform assembly 105 and the objective lens 104 move relative to each other; the objective lens 104 is separated from the waste liquid converted from the working liquid, while the first pump supplies liquid through the liquid supply conduit 1021 and the second pump discharges the waste liquid aspirated in the step c4 to the liquid discharge station 113.

In step c7, the step c4 to the step c6 are executed cyclically for multiple times.

In step c8, the platform assembly 105 and the objective lens 104 move relative to each other, so that the objective lens 104 is in full contact with the working liquid added in the step c6 and enters the working state.

In step c9, after the use of the objective lens 104 is finished, the platform assembly 105 and the objective lens 104 move relative to each other, and the objective lens 104 is separated from the waste liquid converted from the working liquid.

In step c10, the platform assembly 105 and the objective lens 104 move relative to each other, and the liquid discharge conduit 1031 is in contact with the waste liquid used in the step c9, so that the second pump aspirates the waste liquid.

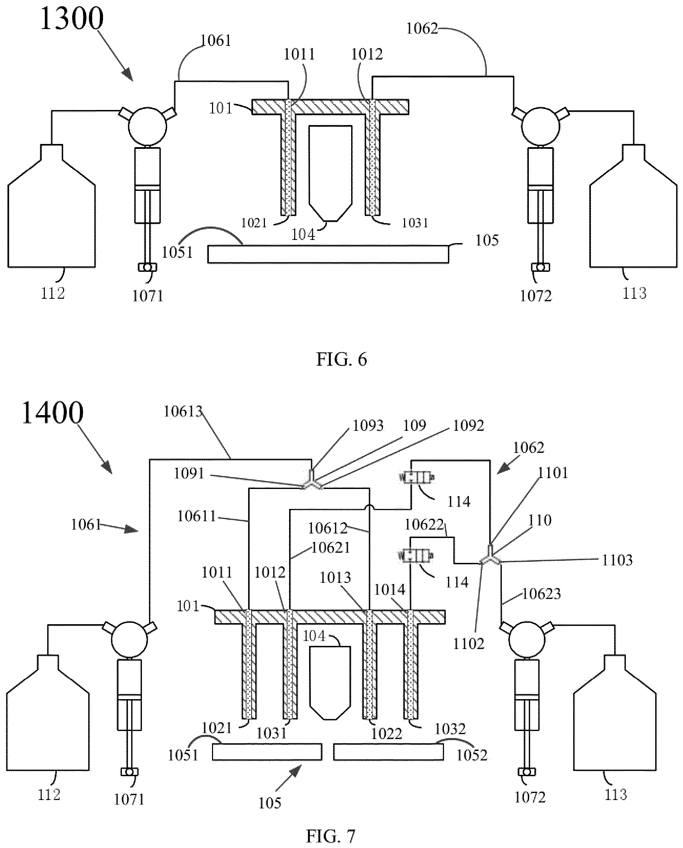

The liquid supply and discharge device 1300 according to a third embodiment of the present disclosure will be described with reference to FIG. 6. For the sake of clarity, the following description focuses on differences between the liquid supply and discharge device 1300 and the liquid supply and discharge device 1200. The liquid supply driver 1071 of the liquid supply and discharge device 1300 is configured as a first pump, and the liquid discharge driver 1072 of the liquid supply and discharge device 1300 is configured as a second pump. The first pump and the second pump operate independently of each other, so that the liquid supply operation and the liquid discharge operation may be performed independently of each other. The first pump and the second pump are respectively located on left and right sides of the working surface 1051.

A liquid supply and discharge operation performed using the liquid supply and discharge device 1300 includes the following steps.

In step d1, the first pump aspirates the working liquid from the liquid supply station 112 and adds the working liquid onto the platform assembly 105 through the liquid supply conduit 1021.

In step d2, the platform assembly 105 and the objective lens 104 move relative to each other, so that the objective lens 104 is in full contact with the working liquid and enters a working state.

In step d3, after the objective lens 104 finishes working, the platform assembly 105 and the objective lens 104 move relative to each other, and the objective lens 104 is separated from the waste liquid converted from the working liquid while the first pump adds the working liquid onto the platform assembly 105 through the liquid supply conduit 1021.

In step d4, the platform assembly 105 and the objective lens 104 move relative to each other, so that the objective lens 104 is in full contact with the working liquid on the platform assembly 105 while the liquid discharge conduit 1031 is in contact with the waste liquid, and the second pump discharges the waste liquid to the liquid discharge station 113.

In step d5, the platform assembly 105 and the objective lens 104 move relative to each other, and the objective lens 104 enters the working state.

In step d6, the step d3 to the step d5 are executed cyclically for multiple times.

In step d7, after the use of the objective lens 104 is finished, the platform assembly 105 and the objective lens 104 move relative to each other, and the objective lens 104 is separated from the waste liquid.

In step d8, the platform assembly 105 and the objective lens 104 further move relative to each other, the liquid discharge conduit 1031 is in contact with the waste liquid, and the second pump discharges the waste liquid to the liquid discharge station 113.

The liquid supply and discharge device 1400 according to a fourth embodiment of the present disclosure will be described with reference to FIG. 7 to FIG. 8. For the sake of clarity, the following description focuses on differences between the liquid supply and discharge device 1400 and the liquid supply and discharge device 1300.

The liquid supply conduit assembly 102 includes two liquid supply conduits 1021 and 1022. The liquid supply pipeline 1061 includes liquid supply sub-pipelines 10611 and 10612 respectively connected to the liquid supply conduits 1021 and 1022, and a common liquid supply pipeline 10613 connected between the liquid supply sub-pipelines 10611, 10612 and the first pump. A first multi-way connector 109 is connected between the common liquid supply pipeline 10613 and the liquid supply sub-pipelines 10611, 10612. The first multi-way connector 109 has a first end 1091 connected to the liquid supply sub-pipeline 10611, a second end 1092 connected to the liquid supply sub-pipeline 10612, and a third end 1093 connected to the common liquid supply pipeline 10613. The liquid supply sub-pipeline 10611 is connected between the first end 1091 and the liquid supply interface 1011, and the liquid supply sub-pipeline 10612 is connected between the second end 1092 and the liquid supply interface 1013.

The liquid discharge conduit assembly 103 includes two liquid discharge conduits 1031 and 1032 respectively corresponding to the liquid supply conduits 1021 and 1022. The liquid discharge pipeline 1062 includes liquid discharge sub-pipelines 10621 and 10622 respectively connected to the liquid discharge conduits 1031 and 1032, and a common liquid discharge pipeline 10623 connected between the liquid discharge sub-pipelines 10621, 10622 and the second pump. A second multi-way connector 110 is connected between the common liquid discharge pipeline 10623 and the liquid discharge sub-pipelines 10621, 10622. The second multi-way connector 110 has a first end 1101 connected to the liquid discharge sub-pipeline 10621, a second end 1102 connected to the liquid discharge sub-pipeline 10622, and a third end 1103 connected to the common liquid discharge pipeline 10623. The liquid discharge sub-pipeline 10621 is connected between the first end 1101 and the liquid discharge interface 1012, and the liquid discharge sub-pipeline 10622 is connected between the second end 1102 and the liquid discharge interface 1014. The objective lens 104 is located between the liquid discharge conduit 1031 and the liquid supply conduit 1022.

The platform assembly 105 has two working surfaces 1051 and 1052. The liquid supply conduit 1021 and the liquid discharge conduit 1031 are used for the working surface 1051, and the liquid supply conduit 1022 and the liquid discharge conduit 1032 are used for the working surface 1052. Two-way valves 114 are respectively provided in the liquid discharge sub-pipelines 10621 and 10622. The liquid supply and discharge device 1400 achieves operations on the two working surfaces 1051 and 1052, and the two-way valves 114 enable liquid discharge operations to be performed on the working surfaces 1051 and 1052 respectively, thereby improving pertinence and independence of the liquid discharge operations for the working surfaces 1051 and 1052.

A liquid supply and discharge operation performed using the liquid supply and discharge device 1400 includes the following steps.

In step e1, the first pump aspirates the working liquid 1120 from the liquid supply station 112 and adds the working liquid 1120 onto the working surfaces 1051 and 1052 respectively through the liquid supply conduits 1021 and 1022.

In step e2, the working surface 1051 and the objective lens 104 move relative to each other, so that the objective lens 104 is in full contact with the working liquid 1120 on the working surface 1051 and enters a working state.

In step e3, after the objective lens 104 finishes working, the working surface 1051 and the objective lens 104 move relative to each other, and the objective lens 104 is separated from the waste liquid 1130 converted from the working liquid 1120 on the working surface 1051.

In step e4, the working surfaces 1051, 1052 and the objective lens 104 move relative to each other, so that the objective lens 104 is in full contact with the working liquid 1120 on the working surface 1052 while the liquid discharge conduit 1031 is in contact with the waste liquid 1130 on the working surface 1051, the two-way valve 114 on the liquid discharge sub-pipeline 10621 is opened, and the waste liquid 1130 on the working surface 1051 is discharged to the liquid discharge station 113 through the second pump.

In step e5, the working surface 1052 and the objective lens 104 move relative to each other, and the objective lens enters the working state.

In step e6, after the objective lens 104 finishes working, the working surface 1052 and the objective lens 104 move relative to each other, and the objective lens 104 is separated from the waste liquid 1130 converted from the working liquid 1120 on the working surface 1052 while the first pump adds the working liquid 1120 onto the working surfaces 1051 and 1052 respectively through the liquid supply conduits 1021 and 1022.

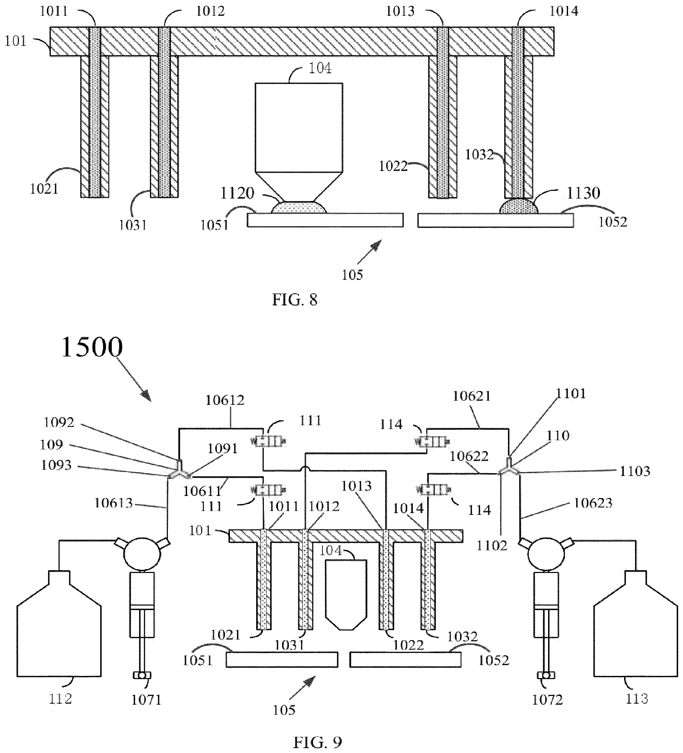

In step e7, the working surfaces 1051, 1052 and the objective lens 104 move relative to each other, so that the objective lens 104 is in full contact with the working liquid 1120 on the working surface 1051 while the liquid discharge conduit 1032 is in contact with the waste liquid 1130 on the working surface 1052 (shown in FIG. 8), the two-way valve 114 on the liquid discharge sub-pipeline 10622 is opened, and the waste liquid 1130 on the working surface 1052 is discharged to the liquid discharge station 113 through the second pump.

In step e8, the step e2 to the step e7 are executed cyclically for multiple times.

In step e9, after the objective lens 104 finishes working, the working surfaces 1051, 1052 and the objective lens 104 move relative to each other, so that the objective lens 104 is in full contact with the working liquid 1120 on the working surface 1052 while the liquid discharge conduit 1031 is in contact with the waste liquid 1130 converted from the working liquid 1120 on the working surface 1051, the two-way valve 114 on the liquid discharge sub-pipeline 10621 is opened, and the waste liquid 1130 on the working surface 1051 is discharged to the liquid discharge station 113 through the second pump.

In step e10, after the use of the objective lens 104 is finished, the working surface 1052 and the objective lens 104 move relative to each other; after the objective lens 104 is separated from the waste liquid 1130 converted from the working liquid 1120 on the working surface 1052, the liquid discharge conduit 1032 is in contact with the waste liquid 1130 on the working surface 1052, the two-way valve 114 on the liquid discharge sub-pipeline 10622 is opened, and the waste liquid 1130 on the working surface 1052 is discharged to the liquid discharge station 113 through the second pump.

The liquid supply and discharge device 1500 according to a fifth embodiment of the present disclosure will be described with reference to FIG. 9. The liquid supply and discharge device 1500 is similar to the liquid supply and discharge device 1400 in many aspects. For the sake of clarity, the following description focuses on differences between the liquid supply and discharge device 1500 and the liquid supply and discharge device 1400.

Two-way valves 111 are provided in the liquid supply sub-pipelines 10611 and 10612 respectively. The liquid supply and discharge device 1500 achieves operations for two working surfaces 1051 and 1052, and the two-way valves 111 enable liquid supply operations to be performed for the working surfaces 1051 and 1052 respectively, thereby improving the pertinence and independence of the liquid supply operations for the working surfaces 1051 and 1052.

A liquid supply and discharge operation performed using the liquid supply and discharge device 1500 includes the following steps.

In step f1, the first pump aspirates the working liquid from the liquid supply station 112, the two-way valve 111 on the liquid supply sub-pipeline 10611 is opened, and the working liquid is added onto the working surface 1051 through the liquid supply conduit 1021.

In step f2, the working surface 1051 and the objective lens 104 move relative to each other, so that the objective lens 104 is in full contact with the working liquid on the working surface 1051.

In step f3, the working surface 1051 and the objective lens 104 move relative to each other, and the objective lens 104 enters the working state.

In step f4, after the objective lens 104 finishes working, the working surface 1051 and the objective lens 104 move relative to each other; the objective lens 104 is separated from the waste liquid converted from the working liquid while the two-way valve 111 on the liquid supply sub-pipeline 10612 is opened, and the first pump adds the working liquid onto the working surface 1052 through the liquid supply conduit 1022.

In step f5, the working surfaces 1051, 1052 and the objective lens 104 move relative to each other, so that the objective lens 104 is in full contact with the working liquid on the working surface 1052 while the liquid discharge conduit 1031 is in contact with the waste liquid on the working surface 1051, the two-way valve 114 on the liquid discharge sub-pipeline 10621 is opened, and the waste liquid on the working surface 1051 is discharged to the liquid discharge station 113 through the second pump.

In step f6, the working surface 1052 and the objective lens 104 move relative to each other, and the objective lens 104 enters the working state.

In step f7, after the objective lens 104 finishes working, the working surface 1052 and the objective lens 104 move relative to each other; the objective lens 104 is separated from the waste liquid converted from the working liquid on the working surface 1052, while the two-way valve 111 on the liquid supply sub-pipeline 10611 is opened so that the first pump adds the working liquid onto the working surface 1051 through the liquid supply conduit 1021.

In step f8, the working surfaces 1051, 1052 and the objective lens 104 move relative to each other, so that the objective lens 104 is in full contact with the working liquid on the working surface 1051 while the liquid discharge conduit 1032 is in contact with the waste liquid on the working surface 1052, and the two-way valve 114 on the liquid discharge sub-pipeline 10622 is opened, so that the second pump discharges the waste liquid on the working surface 1052 to the liquid discharge station 113.

In step f9, the step f3 to the step f8 are executed cyclically for multiple times.

In step f10, the working surface 1051 and the objective lens 104 move relative to each other, and the objective lens 104 enters the working state.

In step f11, after the use of the objective lens 104 is finished, the working surface 1051 and the objective lens 104 move relative to each other, and the objective lens 104 is separated from the waste liquid converted from the working liquid on the working surface 1051.

In step f12, the working surfaces 1051, 1052 and the objective lens 104 move relative to each other, the liquid discharge conduit 1031 is in contact with the waste liquid on the working surface 1051, the two-way valve 114 on the liquid discharge sub-pipeline 10621 is opened, and the waste liquid on the working surface 1051 is discharged to the liquid discharge station 113 through the second pump.

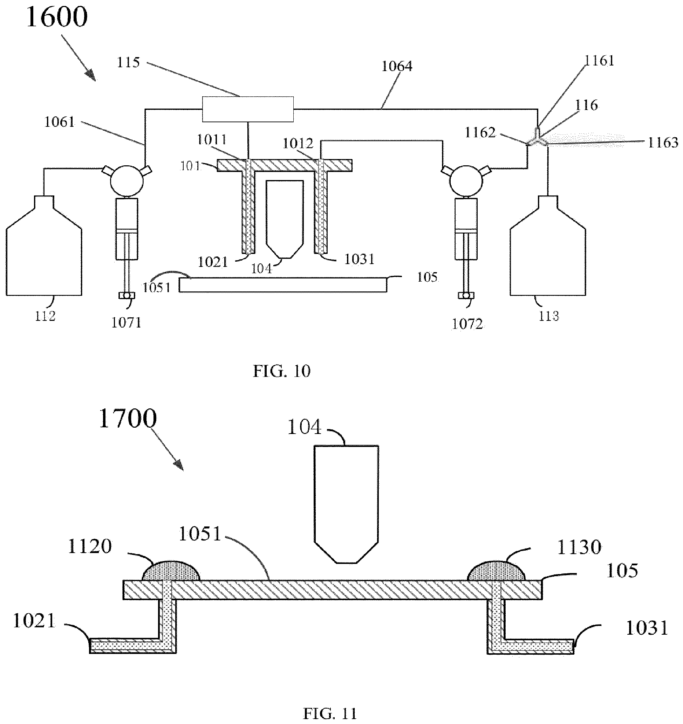

The liquid supply and discharge device 1600 according to a sixth embodiment of the present disclosure will be described with reference to FIG. 10. The liquid supply and discharge device 1600 is similar to the liquid supply and discharge device 1300 in many aspects. For the sake of clarity, the following description focuses on differences between the liquid supply and discharge device 1600 and the liquid supply and discharge device 1300.

A sensor 115 is provided in the liquid supply pipeline 1061, and the sensor 115 is configured to detect a quality (for example, whether a bubble is contained, etc.) of the working liquid flowing into the liquid supply pipeline 1061 through the driver 1071. The fluid interface assembly 106 further includes a bypass pipeline 1064 connected between the sensor 115 and the liquid discharge station 113, and a third multi-way connector 116 connected between the bypass pipeline 1064, the liquid discharge station 113 and the liquid discharge driver 1072. The third multi-way connector 116 includes a first end 1161 connected to the bypass pipeline 1064, a second end 1162 connected to the liquid discharge driver 1072, and a third end 1163 connected to the liquid discharge station 113. The working liquid detected by the sensor 115 as unqualified flows into the liquid discharge station 113 through the bypass pipeline 1064, which is desired for applications with high quality requirements for the working liquid.

Except for detecting the quality of the working liquid to be fed onto the working surface 1051 by using the sensor 115, other steps of the liquid supply and discharge operation performed using the liquid supply and discharge device 1600 are similar to those performed using the liquid supply and discharge device 1300 and will not be repeated here.

The liquid supply and discharge device 1700 according to a seventh embodiment of the present disclosure will be described with reference to FIG. 11. The liquid supply and discharge device 1700 is similar to the liquid supply and discharge devices 1100 to 1600 in many aspects. For the sake of clarity, the following description focuses on differences between the liquid supply and discharge device 1700 and the liquid supply and discharge devices 1100 to 1600.

The conduit structure assembly 101 is formed integrally with the platform assembly 105, which simplifies the construction of the liquid supply and discharge device, so that the opening of the liquid supply conduit assembly 102 and the opening of the liquid discharge conduit assembly 103 are located in the plane of the working surface 1051. Since the conduit structure assembly 101 and the platform assembly 105 are formed integrally, only the platform assembly 105 is shown in FIG. 11. For the sake of description, FIG. 11 only shows a case where the liquid supply conduit assembly 102 includes a single liquid supply conduit 1021 and the liquid discharge conduit assembly 103 includes a single liquid discharge conduit 1031. However, the present disclosure is not limited thereto, and it is also possible that the platform assembly 105 includes a plurality of working surfaces, the liquid supply conduit assembly 102 includes a plurality of liquid supply conduits, and the liquid discharge conduit assembly 103 includes a plurality of liquid discharge conduits.

A liquid supply and discharge operation performed using the liquid supply and discharge device 1700 includes the following steps.

In step g1, the working liquid 1120 is added to the working surface 1051 through the liquid supply conduit 1021.

In step g2, the working surface 1051 and the objective lens 104 move relative to each other, so that the working liquid 1120 is in full contact with the objective lens 104 and the objective lens 104 enters a working state.

In step g3, after the objective lens 104 finishes working, the working surface 1051 and the objective lens 104 move relative to each other, and the waste liquid 1130 converted from the working liquid 1120 is carried by the objective lens 104 to directly above the opening of the liquid discharge conduit 1031; the waste liquid 1130 is aspirated away from the objective lens 104 and discharged by the liquid discharge conduit 1031, while the liquid supply conduit 1021 adds the working liquid 1120 to the working surface 1051.

In step g4, the working surface 1051 and the objective lens 104 move relative to each other, so that the working liquid 1120 is in full contact with the objective lens 104 and the objective lens 104 enters the working state.

In step g5, the step g3 to the step g4 are executed cyclically for multiple times.

In step g6, after the use of the objective lens 104 is finished, the working surface 1051 and the objective lens 104 move relative to each other, the waste liquid 1130 converted from the working liquid 1120 is carried by the objective lens 104 to directly above the opening of the liquid discharge conduit 1031, and the waste liquid 1130 is aspirated away from the objective lens 104 and discharged by the liquid discharge conduit 1031.

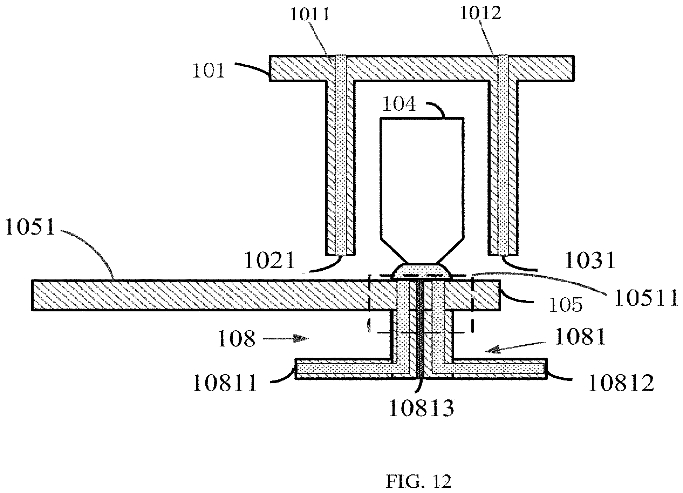

The liquid supply and discharge devices 1100 to 1700 further include a cleaning station (shown in FIG. 12), which stores at least a cleaning liquid used to regularly clean the liquid supply pipeline 1061.

For the sake of clarity, the following description will illustrate a cleaning region 10511 (a region enclosed by a dashed box in the figure) of the cleaning station with reference to FIG. 12 by taking the working surface 1051 of the liquid supply and discharge device 1100 as an example. However, the present disclosure is not limited to this, and the working surface 1052 may also have a cleaning region. The immersion objective lens system further includes a cleaning assembly 108 connected to the cleaning region 10511. The cleaning assembly 108 includes a cleaning conduit assembly 1081 extending to the cleaning region 10511, and a cleaning driving assembly (not shown) connected to the cleaning conduit assembly 1081. The cleaning driving assembly is configured to provide a cleaning liquid to the cleaning region 10511 through the cleaning conduit assembly 1081 to clean the objective lens 104 when the objective lens 104 moves above the cleaning region 10511.

The cleaning conduit assembly 1081 includes a first cleaning conduit 10811 and a second cleaning conduit 10812. The first cleaning conduit 10811 is configured to deliver the cleaning liquid to the cleaning region 10511, and the second cleaning conduit 10812 is configured to aspirate the cleaning liquid from the cleaning region 10511. The cleaning conduit assembly 108 further includes a blowing conduit 10813 between the first cleaning conduit 10811 and the second cleaning conduit 10812, and the blowing conduit 10813 is used to dry the objective lens 104 cleaned by the cleaning liquid.

The present disclosure further provides an immersion objective lens system, including a platform assembly 105 having working surfaces 1051, 1052, and an objective lens 104 movable relative to the platform assembly 105. The immersion objective lens system further includes the liquid supply and discharge devices 1100 to 1700 as described above, and the liquid supply and discharge devices 1100 to 1700 provide the working liquid 1120 as an immersion medium between the objective lens 104 and the working surfaces 1051, 1052.

The present disclosure further provides a gene sequencer (not shown), including a gene sequencing chip and an optical system used to detect the gene sequencing chip. The optical system includes an objective lens 104 movable relative to the gene sequencing chip, and the above-mentioned liquid supply and discharge devices 1100 to 1300 and 1600 used to provide an immersion medium between the objective lens 104 and the gene sequencing chip. A side of the gene sequencing chip close to the objective lens 104 includes the working surface 1051.

The liquid supply and discharge devices 1100 to 1300 and 1600 are used to apply the immersion medium from the liquid supply station 112 to the working surface 1051 and are movable relative to the working surface 1051. The liquid supply and discharge devices 1100 to 1300 and 1600 include: a liquid supply conduit assembly 102 suspended on a side of the working surface 1051 to face and to be spaced apart from the working surface 1051; a liquid discharge conduit assembly 103 spaced apart from the liquid supply conduit assembly 102 and suspended on the same side of the working surface 1051; a conduit structure assembly 101 connected between the liquid supply conduit assembly 102 and the liquid discharge conduit assembly 103; a fluid interface assembly 106 connected between the liquid supply station 112 and the conduit structure assembly 101; and a driving assembly 107 connected to the fluid interface assembly 106. The driving assembly 107 is configured to apply a forward driving force to the liquid supply conduit assembly 102 through the fluid interface assembly 106 so as to apply the immersion medium to the working surface 1051, or to apply a reverse driving force to the liquid discharge conduit assembly 103 so as to aspirate the immersion medium from the working surface 1051.

The present disclosure further provides a gene sequencer for multiple chips (not shown). The gene sequencer includes at least two chip detection positions respectively used to install gene sequencing chips. The gene sequencer further includes an optical system used to detect the gene sequencing chips. The optical system includes an objective lens 104 movable relative to the gene sequencing chips, and the liquid supply and discharge devices 1400 to 1500 used to provide an immersion medium between the objective lens 104 and the gene sequencing chips. A side of each of the at least two gene sequencing chips close to the objective lens 104 includes working surfaces 1051 and 1052. The liquid supply and discharge devices 1400 to 1500 are used to apply the immersion medium from the liquid supply station 112 to the working surfaces 1051 and 1052 and are movable relative to the working surfaces 1051 and 1052. The liquid supply and discharge devices 1400 to 1500 include: at least two liquid supply conduits 1021 and 1022 suspended on a side of the working surfaces 1051 and 1052 to face and to be spaced apart from the working surfaces 1051 and 1052; at least two liquid discharge conduits 1031 and 1032 respectively spaced apart from and corresponding to the at least two liquid supply conduits 1021 and 1022 and suspended on the same side of the working surfaces 1051 and 1052; a conduit structure assembly 101 connected between the at least two liquid supply conduits 1021, 1022 and the at least two liquid discharge conduits 1031, 1032; a fluid interface assembly 106 connected between the liquid supply station 112 and the conduit structure assembly 101; and a driving assembly 107 connected to the fluid interface assembly 106. The driving assembly 107 is configured to apply a forward driving force to the at least two liquid supply conduits 1021 and 1022 through the fluid interface assembly 106 so as to apply the immersion medium to the working surfaces 1051 and 1052 respectively through the at least two liquid supply conduits 1021 and 1022, or to apply a reverse driving force to the at least two liquid discharge conduits 1031 and 1032 so as to aspirate the immersion medium from the working surfaces 1051 and 1052.

According to the above-mentioned steps of the liquid supply and discharge operation performed using the liquid supply and discharge devices 1000 to 1600, the present disclosure further provides a liquid supply and discharge method for an objective lens 104, including a liquid supply step, a detection step, and a liquid discharge step. In the liquid supply step, the liquid supply conduit assembly 102 is suspended above an $i^{th}$ liquid supply region of a working surface 1051 having n liquid supply regions, where i=1, 2, 3...n-1, n; the driving assembly 107 applies the working liquid 1120 from the liquid supply station 112 to the $i^{th}$ liquid supply region through the fluid interface assembly 106, the conduit structure assembly 101 and the liquid supply conduit assembly 102 in sequence. In the detection step, the objective lens 104 is driven to move relative to the working surface 1051, so that the objective lens 104 is in contact with the working liquid 1120 located in the $i^{th}$ liquid supply region and enters a working state; after the working state ends, the objective lens 104 is driven to leave the $i^{th}$ liquid supply region. In the liquid discharge step, the liquid discharge conduit assembly 103 is suspended above the $i^{th}$ liquid supply region, and the driving assembly 107 aspirates the waste liquid 1130 converted from the working liquid 1120 and located in the $i^{th}$ liquid supply region from the $i^{th}$ liquid supply region through the liquid discharge conduit assembly 103, the conduit structure assembly 101 and the fluid interface assembly 106 in sequence.

The liquid supply step, the detection step and the liquid discharge step are executed cyclically until the detection by the objective lens 104 in an $n^{th}$ liquid supply region is completed and the waste liquid 1130 in the $n^{th}$ liquid supply region is aspirated away.

The driving assembly 107 includes a liquid supply driver 1071 and a liquid discharge driver 1072.

In a case of i≥2, the liquid discharge step that the liquid discharge driver 1072 drives the liquid discharge conduit assembly 103 to execute for an (i-1)th liquid supply region is executed simultaneously with the liquid supply step that the liquid supply driver 1071 drives the liquid supply conduit assembly 102 to execute for the ith liquid supply region.

The liquid discharge step further includes: the waste liquid 1130 aspirated into the fluid interface assembly 106 from the ith liquid supply region is filtered using a filter 1063 in the fluid interface assembly 106 and converted into a working liquid 1120, and the driving assembly 107 returns the working liquid 1120 to the liquid supply station 112.

The driving assembly 107 includes a common driver 1071. The common driver 1071 first drives the liquid discharge conduit assembly 103 to execute the liquid discharge step for the (i-1)th liquid supply region, and then drives the liquid supply conduit assembly 102 to execute the liquid supply step for the ith liquid supply region.

The liquid supply driver 1071 is configured as a first pump, and the liquid discharge driver 1072 is configured as a second pump. The first pump and the second pump are connected to each other to form a dual pump. The dual pump is configured so that the first pump drives the liquid supply conduit assembly 102 to execute the liquid supply step in a liquid supply region while the second pump drives the liquid discharge conduit assembly 103 to execute the liquid discharge step in another liquid supply region.

The second pump is connected between the liquid discharge conduit assembly 103 and the liquid discharge station 113, and the liquid discharge step further includes driving, by using the second pump, the waste liquid 1130 from the liquid supply region into the fluid interface assembly 106 so as to flow into the liquid discharge station 113.

The liquid supply step further includes a bubble detection step of detecting, by using the bubble sensor 115 provided in the fluid interface assembly 106, whether a bubble is contained in the working liquid 1120 to be flowed into the liquid supply conduit assembly 102 through the bubble sensor 115, so that in a case of a bubble being detected, the working liquid 1120 flows into the liquid discharge station 113 through the bypass pipeline 1064 connected between the bubble sensor 115 and the liquid discharge station 113, and in a case of no bubble being detected, the working liquid 1120 flows into the liquid supply conduit assembly 102 through the bubble sensor 115.

The above-mentioned method further includes: an objective lens 104 cleaning step of cleaning the objective lens 104 using the cleaning assembly 108 connected to the cleaning region 10511 of the working surface 1051. The cleaning assembly 108 includes a cleaning conduit assembly 1081 extending to the cleaning region 10511, and a cleaning driving assembly (not shown) connected to the cleaning conduit assembly 1081. The cleaning driving assembly is configured to provide a cleaning liquid to the cleaning region 10511 through the cleaning conduit assembly 1081 to clean the objective lens 104 when the objective lens 104 moves above the cleaning region 10511.

The present disclosure further provides a liquid supply and discharge method for an objective lens 104. The objective lens 104 is used to detect a platform assembly 105 including a plurality of platforms, and the plurality of platforms include working surfaces 1051 and 1052. The method includes a liquid supply step, a detection step and a liquid discharge step. In the liquid supply step, at least two liquid supply conduits 1021 and 1022 are respectively suspended above liquid supply regions of the at least two working surfaces 1051 and 1052, and the driving assembly 107 applies the working liquid 1120 from the liquid supply station 112 to the liquid supply regions of the at least two working surfaces 1051 and 1052 through the fluid interface assembly 106, the conduit structure assembly 101 and the at least two liquid supply conduits 1021 and 1022 in sequence. In the detection step, the objective lens 104 is driven to move relative to the at least two working surfaces 1051 and 1052, so that the objective lens 104 successively contacts the working liquid 1120 in the liquid supply regions of the at least two working surfaces 1051 and 1052 and enters a working state; after the working state ends, the objective lens 104 is driven to leave the liquid supply regions. In the liquid discharge step, after the objective lens 104 leaves the liquid supply region, at least two liquid discharge conduits 1031 and 1032 are suspended above the liquid supply regions, and the driving assembly 107 aspirates the fluid located in the liquid supply regions from the liquid supply regions through the at least two liquid discharge conduits 1031 and 1032, the conduit structure assembly 101 and the fluid interface assembly 106 in sequence.

The at least two liquid supply conduits 1021 and 1022 are supported by the same conduit structure assembly 101. In the liquid supply step, the driving assembly 107 drives the working liquid 1120 to flow through the conduit structure assembly 101 and to be applied simultaneously to different ones of the at least two working surfaces 1051 and 1052 respectively through the at least two liquid supply conduits 1021 and 1022.

In the liquid supply step, the driving assembly 107 successively drives the working liquid 1120 to be applied through each of the at least two liquid supply conduits 1021 and 1022 to a corresponding one of the at least two working surfaces 1051 and 1052.

The liquid discharge step further includes filtering, by using the filter 1063, the waste liquid 1130 converted from the working liquid 1120 and entering the fluid interface assembly 106 from the liquid supply region into a working liquid 1120, and returning, by using the driving assembly 107, the working liquid 1120 formed by filtering to the liquid supply station 112.

The liquid discharge step further includes driving, by using the driving assembly 107, the waste liquid 1130 converted from the working liquid 1120 from the liquid supply region to enter the fluid interface assembly 106 so as to flow into the liquid discharge station 113.

The liquid supply step further includes a bubble detection step of detecting, by using the bubble sensor 115 provided in the fluid interface assembly 106, whether a bubble is contained in the working liquid 1120 to be flowed into the liquid supply conduit assembly 102 through the bubble sensor 115, so that in a case of a bubble being detected, the working liquid 1120 flows into the liquid discharge station 113 through the bypass pipeline 1064 connected between the bubble sensor 115 and the liquid discharge station 113, and in a case of no bubble being detected, the working liquid 1120 flows into the liquid supply conduit assembly 102 through the bubble sensor 115.

The above-mentioned method further includes an objective lens 104 cleaning step of cleaning the objective lens 104 using the cleaning assembly 108 connected to the cleaning region 10511 of the working surfaces 1051 and 1052. The cleaning assembly 108 includes a cleaning conduit assembly 1081 extending to the cleaning region 10511, and a cleaning driving assembly (not shown) connected to the cleaning conduit assembly 1081. The cleaning driving assembly is configured to provide a cleaning liquid to the cleaning region 10511 through the cleaning conduit assembly 1081 to clean the objective lens 104 when the objective lens 104 moves above the cleaning region 10511.

The present disclosure further provides a liquid supply and discharge method for an objective lens 104, including step a to step g. In step a, the liquid supply conduit assembly 102 is placed in a conduit structure assembly 101 formed integrally with the platform assembly 105, so that an opening of the liquid supply conduit assembly 102 is located in an $i^{th}$ liquid supply region of the working surface 1051 having n liquid supply regions in a plane of the working surface 1051 of the platform assembly 105, where i=1, 2, 3...n-1, n; the driving assembly 107 applies the working liquid 1120 from the liquid supply station 112 to the $i^{th}$ liquid supply region through the fluid interface assembly 106, the liquid supply conduit assembly 102 and the conduit structure assembly 101 in sequence. In step b, the liquid discharge conduit assembly 103 is placed in the conduit structure assembly 101 formed integrally with the platform assembly 105, so that the opening of the liquid discharge conduit assembly 103 is located in a $j^{th}$ liquid discharge region of the working surface 1051 having m liquid discharge regions in the plane of the working surface 1051 of the platform assembly 105, where j=1, 2, 3...m-1, m. In step c, the objective lens 104 is driven to move relative to the working surface 1051, so that the objective lens 104 is in contact with the working liquid 1120 located in the $i^{th}$ liquid supply region and enters a working state. In step d, after the working state ends, the objective lens 104 and the waste liquid 1130 converted from the working liquid 1120 and attached to the objective lens 104 are driven to leave the $i^{th}$ liquid supply region; the objective lens 104 and the waste liquid 1130 are moved to directly above the opening of the liquid discharge conduit assembly 103, and the waste liquid 1130 is aspirated away from the objective lens 104 and the $j^{th}$ liquid discharge region by the liquid discharge conduit assembly 103 while the liquid supply conduit assembly 102 applies the working liquid 1120 to the $i^{th}$ liquid supply region of the working surface 1051. In step e, the objective lens 104 is driven to move relative to the working surface 1051, so that the objective lens 104 is in contact with the working liquid 1120 located in the $i^{th}$ liquid supply region and enters the working state. In step f, the step d to the step e are executed cyclically for multiple times. In step g, after the working state ends, the objective lens 104 and the waste liquid 1130 converted from the working liquid 1120 and attached to the objective lens 104 are driven to leave the $i^{th}$ liquid supply region, the objective lens 104 and the waste liquid 1130 are moved to directly above the opening of the liquid discharge conduit assembly 103, and the waste liquid 1130 is aspirated away from the objective lens 104 and the $j^{th}$ liquid discharge region by the liquid discharge conduit assembly 103.

In addition, the present disclosure further provides a biochemical assay method assisted by any of the above-mentioned liquid supply and discharge devices, including: loading a sample to be detected into a lane of a chip flow cell; and loading a reagent containing a plurality of different reaction components into the lane of the chip flow cell to perform a biochemical reaction between the sample to be detected and the reagent, where the reaction components include at least one of a sample generation component or a sample analysis component; the biochemical reaction includes generating a sample in the lane of the chip flow cell, by allowing different sample generation components to flow into the lane and controlling a reaction condition in the lane; and the biochemical reaction further includes analyzing the sample generated in the lane, by allowing the sample analysis component to flow into the lane and react with the generated sample to provide a related detectable signal; applying, by using a liquid supply conduit assembly, an immersion medium to a detection position on the working surface corresponding to the related detectable signal; moving an optical system relative to the chip flow cell to the detection position so as to contact the immersion medium and collect the related detectable signal; and separating the optical system from the immersion medium while aspirating the immersion medium away from the detection position by using a liquid discharge conduit assembly, where the liquid supply conduit assembly is spaced apart from the liquid discharge conduit assembly, and the liquid supply conduit assembly and the liquid discharge conduit assembly are connected to each other through a conduit structure assembly. The biochemical reaction is a nucleic acid sequencing reaction, and the sample to be detected is a nucleic acid sequencing library. The detectable signal is preferably an optical signal. Alternatively, the sample to be detected may also be a tissue sample, and the biochemical reaction may be a specific binding reaction.

Those skilled in the art may understand that the embodiments described above are exemplary and may be improved by those skilled in the art. The structures described in various embodiments may be freely combined without causing conflicts in structure or principle.

After describing the preferred embodiments of the present disclosure in detail, those skilled in the art may clearly understand that various changes and modifications may be made without departing from the scope and spirit of the appended claims, and the present disclosure is not limited to the implementations of the exemplary embodiments given in the specification.

**Claims**

1. A liquid supply and discharge device, configured to apply a working liquid from a liquid supply station to a working surface of a platform assembly, wherein the liquid supply and discharge device is movable relative to the working surface, and the liquid supply and discharge device comprises:

   a liquid supply conduit assembly configured to apply the working liquid to the working surface;
   a liquid discharge conduit assembly configured to aspirate the working liquid from the working surface;
   a conduit structure assembly connected between the liquid supply conduit assembly and the liquid discharge conduit assembly;
   a fluid interface assembly connected between the liquid supply station and the conduit structure assembly; and
   a driving assembly connected to the fluid interface assembly, wherein the driving assembly is configured to apply a forward driving force to the liquid supply conduit assembly through the fluid interface assembly so as to apply the working liquid to the working surface, or to apply a reverse driving force to the liquid discharge conduit assembly so as to aspirate the working liquid from the working surface.

2. The liquid supply and discharge device according to claim 1, wherein the liquid supply conduit assembly is suspended on a side of the working surface to face and to be spaced apart from the working surface, and the liquid discharge conduit assembly is spaced apart from the liquid supply conduit assembly and suspended on the same side of the working surface.

3. The liquid supply and discharge device according to claim 1, wherein the conduit structure assembly is formed integrally with the platform assembly, so that an opening of the liquid supply conduit assembly and an opening of the liquid discharge conduit assembly are located in a plane of the working surface.

4. The liquid supply and discharge device according to claim 2 or 3, wherein the driving assembly comprises a driver connected between the liquid supply station and the fluid interface assembly.

5. The liquid supply and discharge device according to claim 4, wherein the fluid interface assembly comprises a liquid supply pipeline in fluid communication with the liquid supply conduit assembly through the conduit structure assembly and a liquid discharge pipeline in fluid communication with the liquid discharge conduit assembly through the conduit structure assembly, and one end of the liquid supply pipeline away from the conduit structure assembly and one end of the liquid discharge pipeline away from the conduit structure assembly are connected to the driver.

6. The liquid supply and discharge device according to claim 5, wherein the conduit structure assembly is provided with a liquid supply interface connecting the liquid supply pipeline with the liquid supply conduit assembly and a liquid discharge interface connecting the liquid discharge pipeline with the liquid discharge conduit assembly.

7. The liquid supply and discharge device according to claim 5, wherein the driving assembly further comprises a reversing assembly connected between the driver and the end of the liquid supply pipeline away from the conduit structure assembly and between the driver and the end of the liquid discharge pipeline away from the conduit structure assembly, the reversing assembly has a first position in which the liquid supply pipeline is in fluid communication with the driver and the liquid discharge pipeline is not in fluid communication with the driver, and a second position in which the liquid discharge pipeline is in fluid communication with the driver and the liquid supply pipeline is not in fluid communication with the driver.

8. The liquid supply and discharge device according to claim 7, wherein the fluid interface assembly further comprises a filter in the liquid discharge pipeline, so that a fluid received by the liquid discharge pipeline from the liquid discharge conduit assembly is filtered by the filter and discharged to the liquid supply station through the reversing assembly.

9. The liquid supply and discharge device according to claim 7, wherein the reversing assembly comprises at least one of a solenoid valve, a rotary valve, a pneumatic reversing valve, an electro-hydraulic reversing valve, a manual reversing valve, a piezoelectric valve, a pinch valve, a rotary valve, or a rotary cutting valve.

10. The liquid supply and discharge device according to claim 5 or 6, further comprising: a liquid discharge station connected to the liquid discharge conduit assembly through the driver and the conduit structure assembly.

11. The liquid supply and discharge device according to claim 10, wherein the driver comprises a liquid supply driver and a liquid discharge driver, the liquid supply driver is connected between the liquid supply pipeline and the liquid supply station, and the liquid discharge driver is connected between the liquid discharge pipeline and the liquid discharge station.

12. The liquid supply and discharge device according to any one of claims 4 to 11, wherein the driver comprises at least one of a peristaltic pump, a plunger pump, a syringe pump, a gear pump, a diaphragm pump, a vacuum pump, a diaphragm pump, or an air compressor.

13. The liquid supply and discharge device according to claim 11, wherein the liquid supply driver is configured as a first pump, the liquid discharge driver is configured as a second pump, the first pump and the second pump are connected to form a dual pump, and the dual pump is configured so that the first pump drives the liquid supply conduit assembly to apply the working liquid to a first position of the working surface while the second pump drives the liquid discharge conduit assembly to aspirate a fluid located at a second position of the working surface; wherein the first position faces the liquid supply conduit assembly, the second position faces the liquid discharge conduit assembly, and the fluid comprises a gas or a waste liquid converted from the working liquid located at the second position.

14. The liquid supply and discharge device according to claim 11, wherein the liquid supply driver is configured as a first pump, the liquid discharge driver is configured as a second pump, and the first pump and the second pump are operable independently of each other.

15. The liquid supply and discharge device according to claim 14, wherein the first pump and the second pump are respectively located on different sides of the working surface.

16. The liquid supply and discharge device according to any one of claims 11 and 13 to 15, wherein the liquid supply conduit assembly comprises at least two liquid supply conduits, the liquid supply pipeline comprises liquid supply sub-pipelines respectively connected to the liquid supply conduits and a common liquid supply pipeline connected between the liquid supply sub-pipelines and the first pump, and a first multi-way connector is connected between the common liquid supply pipeline and the liquid supply sub-pipelines.

17. The liquid supply and discharge device according to claim 16, wherein the liquid discharge conduit assembly comprises at least two liquid discharge conduits respectively corresponding to the liquid supply conduits, the liquid discharge pipeline comprises liquid discharge sub-pipelines respectively connected to the liquid discharge conduits and a common liquid discharge pipeline connected between the liquid discharge sub-pipelines and the second pump, and a second multi-way connector is connected between the common liquid discharge pipeline and the liquid discharge sub-pipelines.

18. The liquid supply and discharge device according to claim 16, wherein at least one liquid supply sub-pipeline is provided with a first two-way valve.

19. The liquid supply and discharge device according to claim 17, wherein at least one liquid discharge sub-pipeline is provided with a second two-way valve.

20. The liquid supply and discharge device according to claim 11, wherein the liquid supply pipeline is provided with a sensor configured to detect a quality of the working liquid flowing into the liquid supply pipeline through the driver, and the fluid interface assembly further comprises a bypass pipeline connected between the sensor and the liquid discharge station so that the working liquid detected by the sensor as unqualified flows into the liquid discharge station through the bypass pipeline.

21. The liquid supply and discharge device according to claim 20, wherein the fluid interface assembly further comprises a third multi-way connector connecting the liquid discharge station, the liquid discharge driver and the bypass pipeline.

22. The liquid supply and discharge device according to any one of claims 5 to 9, 11, 13 to 15 and 17 to 21, further comprising: a cleaning station configured to store at least a cleaning liquid for regularly cleaning the liquid supply pipeline.

23. An immersion objective lens system, comprising a platform assembly having a working surface and an objective lens movable relative to the platform assembly, wherein the immersion objective lens system further comprises the liquid supply and discharge device of any one of claims 1 to 22, and the liquid supply and discharge device is configured to provide a working liquid as an immersion medium between the objective lens and the working surface.

24. The immersion objective lens system according to claim 23, wherein the working surface comprises a cleaning region, and the immersion objective lens system further comprises a cleaning assembly connected to the cleaning region; the cleaning assembly comprises a cleaning conduit assembly extending to the cleaning region and a cleaning driving assembly connected to the cleaning conduit assembly; the cleaning driving assembly is configured to provide a cleaning liquid to the cleaning region through the cleaning conduit assembly to clean the objective lens when the objective lens moves above the cleaning region.

25. The immersion objective lens system according to claim 24, wherein the cleaning conduit assembly comprises a first cleaning conduit and a second cleaning conduit, the first cleaning conduit is configured to deliver the cleaning liquid to the cleaning region, and the second cleaning conduit is configured to aspirate the cleaning liquid from the cleaning region.

26. The immersion objective lens system according to claim 25, wherein the cleaning conduit assembly further comprises a blowing conduit configured to dry the objective lens cleaned by the cleaning liquid.

27. A gene sequencer, comprising a gene sequencing chip and an optical system configured to detect the gene sequencing chip, wherein the optical system comprises an objective lens movable relative to the gene sequencing chip and a liquid supply and discharge device configured to provide an immersion medium between the objective lens and the gene sequencing chip, and a side of the gene sequencing chip close to the objective lens comprises a working surface; and wherein the liquid supply and discharge device is configured to apply the immersion medium from a liquid supply station to the working surface and the liquid supply and discharge device is movable relative to the working surface, and the liquid supply and discharge device comprises:

a liquid supply conduit assembly suspended on a side of the working surface to face and to be spaced apart from the working surface; a liquid discharge conduit assembly spaced apart from the liquid supply conduit assembly and suspended on the same side of the working surface; a conduit structure assembly connected between the liquid supply conduit assembly and the liquid discharge conduit assembly; a fluid interface assembly connected between the liquid supply station and the conduit structure assembly; and a driving assembly connected to the fluid interface assembly, wherein the driving assembly is configured to apply a forward driving force to the liquid supply conduit assembly through the fluid interface assembly so as to apply the immersion medium to the working surface, or to apply a reverse driving force to the liquid discharge conduit assembly so as to aspirate the immersion medium from the working surface.

28. A gene sequencer for multiple chips, wherein the gene sequencer comprises at least two chip detection positions configured to respectively install gene sequencing chips, the gene sequencer further comprises an optical system configured to detect the gene sequencing chips, the optical system comprises an objective lens movable relative to the gene sequencing chips and a liquid supply and discharge device configured to provide an immersion medium between the objective lens and the gene sequencing chip, and a side of each of the at least two gene sequencing chips close to the objective lens comprises a working surface; and wherein the liquid supply and discharge device is configured to apply the immersion medium from a liquid supply station to the working surface and the liquid supply and discharge device is movable relative to the working surface, and the liquid supply and discharge device comprises:

at least two liquid supply conduits suspended on a side of the working surfaces to face and to be spaced apart from the working surfaces; at least two liquid discharge conduits spaced apart from the at least two liquid supply conduits, wherein the at least two liquid discharge conduits respectively correspond to the at least two liquid supply conduits and are suspended on the same side of the working surfaces; a conduit structure assembly connected between the at least two liquid supply conduits and the at least two liquid discharge conduits; a fluid interface assembly connected between the liquid supply station and the conduit structure assembly; and a driving assembly connected to the fluid interface assembly, wherein the driving assembly is configured to apply a forward driving force to the at least two liquid supply conduits through the fluid interface assembly so as to apply the immersion medium to the working surfaces respectively through the at least two liquid supply conduits, or to apply a reverse driving force to the at least two liquid discharge conduits so as to aspirate the immersion medium from the working surfaces.

29. A liquid supply and discharge method for an objective lens, comprising:

a liquid supply step of suspending a liquid supply conduit assembly above an $i^{th}$ liquid supply region of a working surface having n liquid supply regions, i=1, 2, 3...n-1, n, and applying, by using a driving assembly, a working liquid from a liquid supply station to the $i^{th}$ liquid supply region through a fluid interface assembly, a conduit structure assembly and the liquid supply conduit assembly in sequence;
a detection step of driving the objective lens to move relative to the working surface so that the objective lens is in contact with the working liquid in the $i^{th}$ liquid supply region and enters a working state, and driving the objective lens to leave the $i^{th}$ liquid supply region after the working state ends; and
a liquid discharge step of suspending a liquid discharge conduit assembly above the $i^{th}$ liquid supply region, and aspirating, by using the driving assembly, a waste liquid converted from the working liquid from the $i^{th}$ liquid supply region through the liquid discharge conduit assembly, the conduit structure assembly and the fluid interface assembly in sequence.

30. The liquid supply and discharge method according to claim 29, wherein the liquid supply step, the detection step and the liquid discharge step are executed cyclically until a detection of the objective lens in an $n^{th}$ liquid supply region is completed and a fluid in the $n^{th}$ liquid supply region is aspirated.

31. The liquid supply and discharge method according to claim 30, wherein the driving assembly comprises a liquid supply driver and a liquid discharge driver, and in a case of i≥2, the liquid discharge step that the liquid discharge driver drives the liquid discharge conduit assembly to execute for an $(i-1)^{th}$ liquid supply region is executed simultaneously with the liquid supply step that the liquid supply driver drives the liquid supply conduit assembly to execute for the $i^{th}$ liquid supply region.

32. The liquid supply and discharge method according to claim 30, wherein the fluid comprises gas and the waste liquid converted from the working liquid, and the liquid discharge step further comprises: filtering, by using a filter in the fluid interface assembly, the waste liquid aspirated into the fluid interface assembly from the $i^{th}$ liquid supply region so as to convert the waste liquid into the working liquid, and returning the working liquid to the liquid supply station by using the driving assembly.

33. The liquid supply and discharge method according to claim 29, wherein the driving assembly comprises a common driver configured to firstly drive the liquid discharge conduit assembly to execute the liquid discharge step for an $(i-1)^{th}$ liquid supply region, and then drive the liquid supply conduit assembly to execute the liquid supply step for the $i^{th}$ liquid supply region.

34. The liquid supply and discharge method according to claim 30, wherein the liquid supply driver is configured as a first pump, the liquid discharge driver is configured as a second pump, the first pump and the second pump are connected to each other to form a dual pump, and the dual pump is configured so that the first pump drives the liquid supply conduit assembly to execute the liquid supply step in a liquid supply region while the second pump drives the liquid discharge conduit assembly to execute the liquid discharge step in another liquid supply region.

35. The liquid supply and discharge method according to claim 34, wherein the second pump is connected between the liquid discharge conduit assembly and the liquid discharge station, and the liquid discharge step further comprises driving, by using the second pump, the waste liquid from the liquid supply region to enter the fluid interface assembly so as to flow into the liquid discharge station.

36. The liquid supply and discharge method according to claim 35, wherein the liquid supply step further comprises a bubble detection step of detecting, by using a bubble sensor provided in the fluid interface assembly, whether a bubble is contained in the working liquid to be flowed into the liquid supply conduit assembly through the bubble sensor, so that in a case of the bubble being detected, the working liquid flows into the liquid discharge station through a bypass pipeline connected between the bubble sensor and the liquid discharge station, and in a case of no bubble being detected, the working liquid flows into the liquid supply conduit assembly through the bubble sensor.

37. The liquid supply and discharge method according to any one of claims 29 to 36, further comprising an objective lens cleaning step of cleaning the objective lens using a cleaning assembly connected to a cleaning region of the working surface, wherein the cleaning assembly comprises a cleaning conduit assembly extending to the cleaning region and a cleaning driving assembly connected to the cleaning conduit assembly, and the cleaning driving assembly is configured to provide a cleaning liquid to the cleaning region through the cleaning conduit assembly to clean the objective lens when the objective lens moves above the cleaning region.

38. A liquid supply and discharge method for an objective lens, wherein the objective lens is configured to detect a platform assembly comprising a plurality of platforms, each of the plurality of platforms comprises a working surface, and the liquid supply and discharge method comprises:

a liquid supply step of suspending at least two liquid supply conduit assemblies respectively above liquid supply regions of at least two working surfaces, and applying, by using a driving assembly, a working liquid from a liquid supply station to the liquid supply regions on the at least two working surfaces through a fluid interface assembly, a conduit structure assembly and the at least two liquid supply conduit assemblies in sequence;
a detection step of driving the objective lens to move relative to the at least two working surfaces so that the objective lens successively contacts the working liquid in the liquid supply regions on the at least two working surfaces and enters a working state, and driving the objective lens to leave the liquid supply regions after the working state ends; and
a liquid discharge step of suspending a liquid discharge conduit assembly above the liquid supply regions after the objective lens leaves the liquid supply regions, and aspirating, by using the driving assembly, a fluid located in the liquid supply regions from the liquid supply regions through the liquid discharge conduit assembly, the conduit structure assembly and the fluid interface assembly in sequence.

39. The liquid supply and discharge method according to claim 38, wherein the at least two liquid supply conduit assemblies are supported by the same conduit structure assembly, and the liquid supply step further comprises driving, by using the driving assembly, the working liquid to flow through the conduit structure assembly and to be applied to different working surfaces among the at least two working surfaces simultaneously through the at least two liquid supply conduit assemblies.

40. The liquid supply and discharge method according to claim 38, wherein the liquid supply step further comprises: successively driving, by using the driving assembly, the working liquid to be applied through each of the at least two liquid supply conduit assemblies to a corresponding working surface of the at least two working surfaces.

41. The liquid supply and discharge method according to any one of claims 38 to 40, wherein the liquid discharge step further comprises: filtering, by using a filter, a waste liquid converted from the working liquid and entering the fluid interface assembly from the liquid supply region into the working liquid, and returning, by using the driving assembly, the working liquid formed by the filtering to the liquid supply station.

42. The liquid supply and discharge method according to any one of claims 38 to 40, wherein the liquid discharge step further comprises: driving, by using the driving assembly, the waste liquid converted from the working liquid from the liquid supply region to enter the fluid interface assembly so as to flow into a liquid discharge station.

43. The liquid supply and discharge method according to claim 42, wherein the liquid supply step further comprises a bubble detection step of detecting, by using a bubble sensor provided in the fluid interface assembly, whether a bubble is contained in the working liquid to be flowed into the liquid supply conduit assembly through the bubble sensor, so that in a case of the bubble being detected, the working liquid flows into the liquid discharge station through a bypass pipeline connected between the bubble sensor and the liquid discharge station, and in a case of no bubble being detected, the working liquid flows into the liquid supply conduit assembly through the bubble sensor.

44. The liquid supply and discharge method according to any one of claims 38 to 40, further comprising an objective lens cleaning step of cleaning the objective lens using a cleaning assembly connected to a cleaning region of the working surface, wherein the cleaning assembly comprises a cleaning conduit assembly extending to the cleaning region and a cleaning driving assembly connected to the cleaning conduit assembly, and the cleaning driving assembly is configured to provide a cleaning liquid to the cleaning region through the cleaning conduit assembly to clean the objective lens when the objective lens moves above the cleaning region.

45. A liquid supply and discharge method for an objective lens, comprising:

step a of placing a liquid supply conduit assembly in a conduit structure assembly formed integrally with a platform assembly, so that an opening of the liquid supply conduit assembly is located in an $i^{th}$ liquid supply region of a working surface having n liquid supply regions in a plane of the working surface of the platform assembly, i=1, 2, 3...n-1, n, and applying, by using a driving assembly, a working liquid from a liquid supply station to the i$^{th}$ liquid supply region through a fluid interface assembly, the liquid supply conduit assembly and the conduit structure assembly in sequence;

step b of placing a liquid discharge conduit assembly in the conduit structure assembly formed integrally with the platform assembly, so that an opening of the liquid discharge conduit assembly is located in a j$^{th}$ liquid discharge region of the working surface having m liquid discharge regions in the plane of the working surface of the platform assembly, j=1, 2, 3...m-1, m;

step c of driving the objective lens to move relative to the working surface so that the objective lens contacts the working liquid located in the i$^{th}$ liquid supply region and enters a working state;

step d of driving the objective lens and a waste liquid converted from the working liquid and attached to the objective lens to leave the i$^{th}$ liquid supply region after the working state ends, moving the objective lens and the waste liquid to directly above the opening of the liquid discharge conduit assembly, and aspirating the waste liquid from the objective lens and the j$^{th}$ liquid discharge region by using the liquid discharge conduit assembly while applying the working liquid to the i$^{th}$ liquid supply region of the working surface by using the liquid supply conduit assembly;

step e of driving the objective lens to move relative to the working surface so that the objective lens contacts the working liquid located in the i$^{th}$ liquid supply region and enters the working state;

step f of cyclically executing the step d to the step e for multiple times; and

step g of driving the objective lens and the waste liquid converted from the working liquid and attached to the objective lens to leave the i$^{th}$ liquid supply region after the working state ends, moving the objective lens and the waste liquid to directly above the opening of the liquid discharge conduit assembly, and aspirating the waste liquid from the objective lens and the j$^{th}$ liquid discharge region by using the liquid discharge conduit assembly.

46. A biochemical assay method, comprising:

loading a sample to be detected into a lane of a chip flow cell;

loading a reagent containing a plurality of different reaction components into the lane of the chip flow cell to perform a biochemical reaction between the sample to be detected and the reagent, wherein the reaction components comprise at least one of a sample generation component or a sample analysis component; the biochemical reaction comprises generating a sample in the lane of the chip flow cell, by allowing different sample generation components to flow into the lane and controlling a reaction condition in the lane; and the biochemical reaction further comprises analyzing the sample generated in the lane, by allowing the sample analysis component to flow into the lane and react with the generated sample to provide a related detectable signal;

applying, by using a liquid supply conduit assembly, an immersion medium to a detection position on a working surface corresponding to the related detectable signal;

moving an optical system relative to the chip flow cell to the detection position so as to contact the immersion medium and collect the related detectable signal; and

separating the optical system from the immersion medium while aspirating the immersion medium from the detection position by using a liquid discharge conduit assembly, wherein the liquid supply conduit assembly is spaced apart from the liquid discharge conduit assembly, and the liquid supply conduit assembly and the liquid discharge conduit assembly are connected to each other through a conduit structure assembly.

47. The biochemical assay method according to claim 46, wherein the biochemical reaction is a nucleic acid sequencing reaction, and the sample to be detected is a nucleic acid sequencing library.

48. The biochemical assay method according to claim 46, wherein the detectable signal is an optical signal.

49. The biochemical assay method according to claim 46, wherein the sample to be detected is a tissue sample, and the biochemical reaction is a specific binding reaction.

112        113

Liquid supply
station

Liquid
discharge
station

1000

Driving assembly

107

102

Liquid supply
conduit assembly

Liquid supply
conduit 1

......

Liquid supply
conduit N

101

Fluid interface
assembly

106

Conduit structure
assembly

Immersion
objective lens

104

103

Liquid discharge
conduit assembly

Liquid discharge
conduit 1

......

Liquid discharge
conduit N

105

Platform assembly

Working surface

Working surface

1051           1052

FIG. 1

1100

106

1062

1063

1012

1011

101

102

103

1021

104

1031

105

1051

112

1071

1073

1061

FIG. 2

1011

1012

101

104

1021

1051

1031

1120

1130

105

FIG. 3

FIG. 4

FIG. 5

1300

1061    1011    1012    1062

101

1021    104    1031

1051    105

112    1071    1072    113

FIG. 6

1400

10613    1093    109    1092

1091

1061    10611    10612    1062    1101

10621    10622    110

1011    1012    1013    1014    114    1103

101    104    10623

1021    1031    1022    1032    1102

1051    105    1052

112    1071    1072    113

FIG. 7

FIG. 8

FIG. 9

1600

115    1064    1161

1061    1162    116

1011    1012    1163

101

1021    104    1031

112    1071    105    1072    113
1051

FIG. 10

1700    104

1120    1051    1130

1021    105    1031

FIG. 11

FIG. 12

## INTERNATIONAL SEARCH REPORT

| International application No. |
|---|
| **PCT/CN2022/130580** |

### A. CLASSIFICATION OF SUBJECT MATTER

C12M1/36(2006.01)i;  G02B21/33(2006.01)i

According to International Patent Classification (IPC) or to both national classification and IPC

### B. FIELDS SEARCHED

Minimum documentation searched (classification system followed by classification symbols)

IPC:C12M; G02B

Documentation searched other than minimum documentation to the extent that such documents are included in the fields searched

Electronic data base consulted during the international search (name of data base and, where practicable, search terms used)

CNABS, CNTXT, ENTXT, ENTXTC, JPTXT, KRTXT, VEN, BING, WEB OF SCIENCE: 测序, 微流控, 微流体, 芯片, 流动池, 流通池, 生化, 浸没式物镜, 浸没式显微镜, 浸没物镜, 浸没显微镜, ?浸物镜, ?浸显微镜, 浸液物镜, 浸液显微镜, 分配, 回收, 排, 喷, 抽吸, 移动, 运动, Biochemical, chip, conduit, expulsion, immersion, outlet, pipe, sequencing, suction, tube, immersion objective, mov+, slid+, immersion Microscope

### C. DOCUMENTS CONSIDERED TO BE RELEVANT

| Category* | Citation of document, with indication, where appropriate, of the relevant passages | Relevant to claim No. |
|---|---|---|
| X | CN 114902107 A (FEI GERMANY GMBH) 12 August 2022 (2022-08-12) description, paragraphs 57, 81-83, 86, 100, 107, and 114; and figures 3 and 10 | 1, 3-6, 22-25, 29-30, 32, 34-37, 45 |
| Y | CN 114902107 A (FEI GERMANY GMBH) 12 August 2022 (2022-08-12) description, paragraphs 57, 81-83, 86, 100, 107, and 114; and figures 3 and 10 | 2, 7-21, 26-27, 46-49 |
| Y | CN 113993690 A (DRESDEN UNIVERSITY OF TECHNOLOGY) 28 January 2022 (2022-01-28) description, paragraphs 49 and 88-97; and figures 2-3 | 2, 7-21, 26-27 |
| Y | WO 9949504 A1 (NIKON CORP.) 30 September 1999 (1999-09-30) description, page 12, lines 13-23; and figure 6 | 16-19 |
| Y | CN 206638882 U (SHENZHEN HUADA GENE RESEARCH INSTITUTE) 14 November 2017 (2017-11-14) description, paragraphs 16-31, and figures 1-2 | 27, 46-49 |
| A | JP 2005277363 A (NIKON CORP.) 06 October 2005 (2005-10-06) entire document | 1-49 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 July 2023** | **12 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| PCT/CN2022/130580 |

### C. DOCUMENTS CONSIDERED TO BE RELEVANT

| Category* | Citation of document, with indication, where appropriate, of the relevant passages | Relevant to claim No. |
|---|---|---|
| A | JP 2007121500 A (NIKON CORP.) 17 May 2007 (2007-05-17) entire document | 1-49 |
| A | US 2015212310 A1 (OLYMPUS CORP.) 30 July 2015 (2015-07-30) entire document | 1-49 |

Form PCT/ISA/210 (second sheet) (July 2022)

**INTERNATIONAL SEARCH REPORT**
Information on patent family members

International application No.

**PCT/CN2022/130580**

| Patent document cited in search report | | | Publication date (day/month/year) | Patent family member(s) | | | Publication date (day/month/year) |
|---|---|---|---|---|---|---|---|
| CN | 114902107 | A | 12 August 2022 | JP | 2023507659 | A | 24 February 2023 |
| | | | | WO | 2021124282 | A1 | 24 June 2021 |
| | | | | EP | 4078266 | A1 | 26 October 2022 |
| | | | | US | 2022404602 | A1 | 22 December 2022 |
| CN | 113993690 | A | 28 January 2022 | US | 2022219388 | A1 | 14 July 2022 |
| | | | | EP | 3983199 | A1 | 20 April 2022 |
| | | | | WO | 2020249171 | A1 | 17 December 2020 |
| | | | | DE | 102019115780 | A1 | 17 December 2020 |
| | | | | DE | 102019115780 | B4 | 21 October 2021 |
| WO | 9949504 | A1 | 30 September 1999 | AU | 2747999 | A | 18 October 1999 |
| CN | 206638882 | U | 14 November 2017 | None | | | |
| JP | 2005277363 | A | 06 October 2005 | None | | | |
| JP | 2007121500 | A | 17 May 2007 | JP | 4788289 | B2 | 05 October 2011 |
| US | 2015212310 | A1 | 30 July 2015 | EP | 2905646 | A1 | 12 August 2015 |
| | | | | US | 9606347 | B2 | 28 March 2017 |
| | | | | JP | 2015141396 | A | 03 August 2015 |
| | | | | JP | 6261357 | B2 | 17 January 2018 |

Form PCT/ISA/210 (patent family annex) (July 2022)